(19) Europäisches Patentamt
European Patent Office
Office européen des brevets

(11) EP 3 950 893 B1

(12) # EUROPEAN PATENT SPECIFICATION

(45) Date of publication and mention of the grant of the patent:
**17.07.2024 Bulletin 2024/29**

(21) Application number: **19920834.9**

(22) Date of filing: **26.03.2019**

(51) International Patent Classification (IPC):
***C10N 20/00*** (2006.01) ***C10N 20/02*** (2006.01)
***C10N 30/02*** (2006.01) ***C10N 40/04*** (2006.01)
***C10M 169/04*** (2006.01) ***C08F 4/659*** (2006.01)
***C08F 210/06*** (2006.01) ***C08F 210/16*** (2006.01)
*C10N 20/04* (2006.01) *C10N 70/00* (2006.01)
*C10N 30/08* (2006.01) *C10N 30/10* (2006.01)

(52) Cooperative Patent Classification (CPC):
(C-Sets available)
**C10M 169/04;** C08F 4/65912; C08F 210/06;
C08F 210/16; C10M 2203/1006; C10M 2203/1025;
C10M 2205/022; C10M 2205/0225;
C10M 2205/026; C10M 2205/0285;
C10M 2207/026; C10M 2207/2835;
C10M 2207/289; C10M 2209/084; C10N 2020/011;

(Cont.)

(86) International application number:
**PCT/JP2019/012999**

(87) International publication number:
**WO 2020/194544 (01.10.2020 Gazette 2020/40)**

(54) **LUBRICATING OIL COMPOSITION FOR INDUSTRIAL GEARS AND METHOD FOR PRODUCING SAME**

SCHMIERÖLZUSAMMENSETZUNG FÜR INDUSTRIEGETRIEBE UND VERFAHREN ZU DEREN HERSTELLUNG

COMPOSITION D’HUILE LUBRIFIANTE POUR ROUE D’ENGRENAGE INDUSTRIELLE, ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.02.2022 Bulletin 2022/06**

(73) Proprietor: **Mitsui Chemicals, Inc.**
**Tokyo 104-0028 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/147215**
**JP-A- 2016 069 406**
**JP-A- 2016 098 342**
**JP-A- 2016 188 318**
**JP-A- 2016 188 318**
**US-A1- 2009 088 543**
**US-A1- 2015 266 985**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C10N 2020/02; C10N 2020/04; C10N 2020/065;
C10N 2030/02; C10N 2030/08; C10N 2030/10;
C10N 2040/04; C10N 2070/00

C-Sets
**C08F 210/06, C08F 4/65927;**
**C08F 210/16, C08F 4/65927;**
C08F 210/06, C08F 210/16, C08F 2500/02,
C08F 2500/03, C08F 2500/17, C08F 2500/27;
C08F 210/16, C08F 210/06, C08F 2500/02,
C08F 2500/03, C08F 2500/17, C08F 2500/27;
C10M 2203/1025, C10N 2020/02;
C10M 2205/022, C10M 2205/026;
C10M 2205/022, C10M 2205/028;
C10M 2205/0225, C10M 2205/0245, C10N 2020/04

## Description

### Technical Field

The present invention relates to a lubricating oil composition for industrial gears and a method for producing the same.

### Background Art

Compared to automobile gears, there is generally a tendency for reducer gears and transmission gears utilized in industrial equipment machinery such as machine tools and wind power generators to bear high loads, hence it is often the case that gear friction is a problem. In order to protect the gears, a lubricating oil with a higher viscosity and easier oil film formation compared to the lubricating oil for automobiles, is applied. Moreover, in order to lower the maintenance cost incurred by changing the lubricating oil, a lubricating oil excellent in long-term stability is in demand (refer to Non-patent Literature 1).

Meanwhile, as global warming advances, it is an urgent task to cut carbon dioxide emissions, which is one of the gases contributing to the greenhouse effect. In all kinds of industrial fields, reducing the amount of electric power consumption has also come to be demanded. In order to reduce the electric power consumption amount, it is necessary to reduce the lubricating oil agitation torque at low temperatures to the vicinity of the utilization temperature, hence measures for lowering the viscosity of lubricating oil can be considered. However, since viscosity also ends up becoming lowered at high temperatures due to the lowering of the base oil viscosity, oil film formation becomes difficult at high temperatures, and as a result, there is a possibility that sufficient gear protecting performance cannot be expressed. Moreover, particularly in cold regions, it is desirable for viscosity to be low at low temperatures, in order to reduce torque when starting engines during winter.

In order to have a balance between low torque at low temperatures and oil film formation at high temperatures, certain types of polymers soluble in lubricating oil bases have been utilized as viscosity modifying agents (also called viscosity index improving agents), with the objective of reducing the viscosity temperature dependency. As such viscosity improving agents, α-olefin polymer and polybutene have been widely utilized in recent years (refer to Patent Literature 1 and 2). However, there were problems in that the shear stability of α-olefin polymer was not sufficient, and thus had inferior long-term stability. There was moreover a problem of the polybutene having inferior temperature viscosity properties, low-temperature properties, and heat resistance stability.

In order to improve this, investigation was conducted where ethylene-α-olefin copolymer having a specific kinematic viscosity (100°C kinematic viscosity of 30 to 350 $mm^2/s$) was utilized. However, there was room for improvement from the perspective of finding a balance between low torque at low temperature and oil film formation at high temperature (refer to Patent Literature 3).

Patent Literature 4 discloses a lubricating oil composition containing a specific lubricant base oil and a specific ethylene-α-olefin copolymer, where this composition has a balance of these properties, and which is suitably applicable to industrial gears.

Moreover, Patent Literature 5 describes a method for producing a liquid random copolymer of ethylene and α-olefin, wherein further described is that this copolymer is useful as a lubricating oil.

### Citation List

#### Patent Literature

Patent Literature 1: WO 2000/034420 A1
Patent Literature 2: JP H08-301939 A
Patent Literature 3: JP 2011-190377 A
Patent Literature 4: JP 2016-069406 A
Patent Literature 5: EP 2921509 A1


#### Non-patent Literature

Non-patent Literature 1: Illustrated guide to the introductory basics of industrial lubricating oil (2011); Author/Editor: Lubricants Department, Lubricant Technology 2nd section of Idemitsu Kosan Co Ltd, published by Nikkan Kogyo Shimbun, Ltd [The Daily Industrial News]

Summary of Invention

Technical Problem

However, there was further room for improvement in conventional lubricating oil compositions, from the perspective of providing a lubricating oil composition for industrial gears having remarkably excellent temperature viscosity properties; namely, having oil film retention properties at high temperatures and low-temperature viscosity properties, and further having excellent thermal and oxidation stability.

Solution to Problem

The present inventors keenly investigated the development of a lubricating oil composition having excellent performance, and as a result, discovered that the aforementioned problem can be solved with a lubricating oil composition which contains, with a specific lubricant base oil, an ethylene-α-olefin (co)polymer prepared by means of a specific catalyst, and satisfies specific conditions, thus arriving at the perfection of the present invention. The present invention specifically mentions the below aspect.

[1] A lubricating oil composition for industrial gears, comprising

10 to 90% by mass of a lubricant base oil (A) having the properties of the below (A1) to (A3), and
90 to 10% by mass of a liquid random copolymer (B) of ethylene and α-olefin, the liquid random copolymer (B) being prepared by the below method (α), wherein the total amount of the lubricant base oil (A) and the copolymer (B) is 100% by mass,
the lubricating oil composition for industrial gears having the properties of the below (C1).

(A1) The lubricant base oil (A) has a kinematic viscosity at 100°C of 1 to 100 $mm^2/s$.
(A2) The lubricant base oil (A) has a viscosity index of 100 or more.
(A3) The lubricant base oil (A) has a pour point of 0°C or lower.
(C1) The lubricating oil composition for industrial gears has a kinematic viscosity at 40°C of 100 to 10,000 $mm^2/s$.

(Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

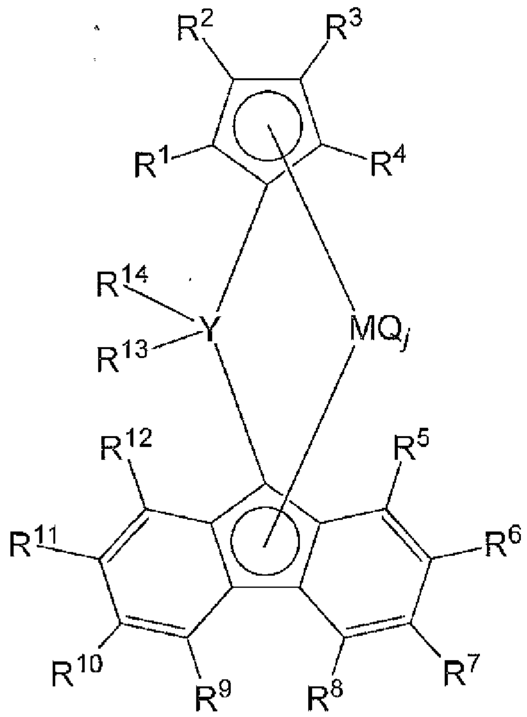

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure, wherein $R^2$ or $R^3$ bonded to the 3-position of the cyclopentadienyl group is a n-butyl group,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

[3] The lubricating oil composition for industrial gears of the aforementioned [1], wherein $R^6$ and $R^{11}$, being the same, are hydrocarbon groups having 1 to 20 carbon atoms.
[6] The lubricating oil composition for industrial gears of any of the aforementioned [1] to [3], wherein in the metallocene compound represented by the above Formula 1, substituents ($R^6$ and $R^{11}$) bonded to the 2-position and 7-position of the fluorenyl group are all tert-butyl groups.
[7] The lubricating oil composition for industrial gears of any of the aforementioned [1] to [6], wherein the compound which reacts with the bridged metallocene compound to form an ion pair is a compound represented by the following Formula 6.

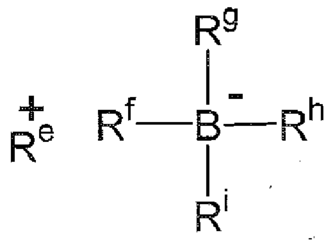

... (Formula 6)

[In Formula 6, $R^{e+}$ is H+, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

[8] The lubricating oil composition for industrial gears of the aforementioned [7], wherein the ammonium cation is a dimethylanilinium cation.

[9] The lubricating oil composition for industrial gears of the aforementioned [7] or [8], wherein the catalyst system further comprises an organoaluminum compound selected from a group consisting of trimethyl aluminum and triisobutyl aluminum.

[10] The lubricating oil composition for industrial gears according to any of the aforementioned [1] to [9], wherein the liquid random copolymer (B) has the properties of the below (B1) to (B5),

(B1) The liquid random copolymer comprises 40 to 60 mol% of ethylene units and 60 to 40 mol% of α-olefin units having 3 to 20 carbon atoms,

(B2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC),

(B3) The liquid random copolymer has a kinematic viscosity at 100°C of 30 to 5,000 $mm^2/s$,

(B4) The liquid random copolymer has a pour point of 30 to - 45°C, and

(B5) The liquid random copolymer has a Bromine Number of 0.1 g / 100 g or less.

[11] The lubricating oil composition for industrial gears according to any of the aforementioned [1] to [10], having a kinematic viscosity at 40°C of 250 to 5,000 $mm^2/s$.

[12] The lubricating oil composition for industrial gears according to any of the aforementioned [1] to [11], wherein the lubricant base oil (A) further satisfies the below (A4) to (A6).

(A4) The lubricant base oil (A) has a kinematic viscosity at 100°C of 1 to 10 $mm^2/s$.

(A5) The lubricant base oil (A) has a viscosity index of 110 or more.

(A6) The lubricant base oil (A) has a pour point of -10°C or lower.

[13] The lubricating oil composition for industrial gears according to any of the aforementioned [1] to [12], wherein 30 to 100% by mass of the lubricant base oil (A) is a mineral oil.

[14] The lubricating oil composition for industrial gears according to any of the aforementioned [1] to [13], wherein 30 to 100% by mass of the lubricant base oil (A) is a synthetic oil, and the synthetic oil is a poly α-olefin (PAO) and/or an ester oil.

[15] A gear oil for wind power generation, consisting of the lubricating oil composition according to any of the aforementioned [1] to [14].

[16] A gear oil for machine tools and molding machines, consisting of the lubricating oil composition according to any of the aforementioned [1] to [14].

[17] A method for producing a lubricating oil composition for industrial gears, comprising the steps of:

preparing a liquid random copolymer (B) of ethylene and α-olefin by the following method (α); and

preparing a lubricating oil composition for industrial gears by mixing a lubricant base oil (A) in an amount of 10 to 90% by mass of the lubricating oil composition, the lubricant base oil (A) having the properties of the below (A1) to (A3), and the liquid random copolymer (B) in an amount of 90 to 10% by mass of the lubricating oil composition, wherein the total amount of the lubricant base oil (A) and the copolymer (B) is 100% by mass, the lubricating oil composition for industrial gears having the property of the below (C1).

(A1) The lubricant base oil (A) has a kinematic viscosity at 100°C of 1 to 100 $mm^2/s$.

(A2) The lubricant base oil (A) has a viscosity index of 100 or more.

(A3) The lubricant base oil (A) has a pour point of 0°C or lower.

(C1) The lubricating oil composition for industrial gears has a kinematic viscosity at 40°C of 100 to 10,000 $mm^2/s$.

(Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and

(b) at least one compound selected from a group consisting of

(i) an organoaluminum oxy-compound, and
(ii) a compound which reacts with the bridged metallocene compound to form an ion pair.

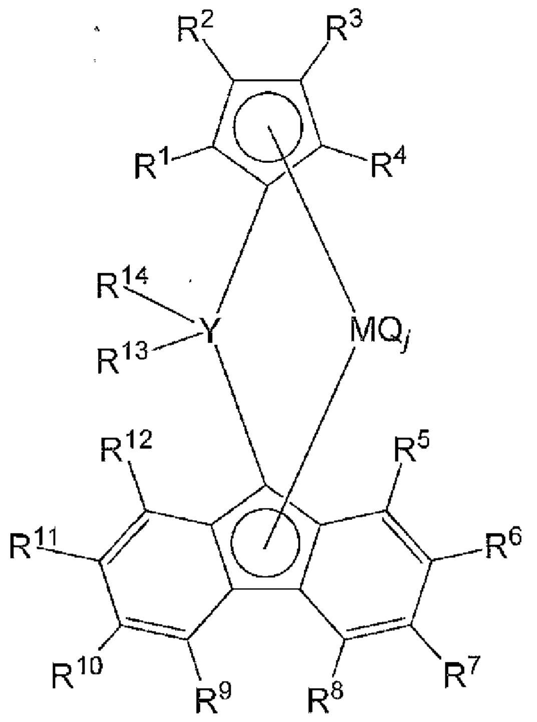

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure, wherein $R^2$ or $R^3$ bonded to the 3-position of the cyclopentadienyl group is a n-butyl group,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Advantageous Effects of Invention

The lubricating oil composition of the present invention has high temperature viscosity properties; namely has oil film retention properties at high temperatures and excellent low-temperature viscosity properties, and further has excellent thermal and oxidation stability. The lubricating oil composition is preferably applicable to industrial gear oil, and particularly to gear oil for wind power generators, or gear oil for machine tools and molding machines.

Description of Embodiments

The lubricating oil composition for industrial gears according to the present invention (hereinafter, also referred to merely as "lubricating oil composition") will be explained in detail below.
The lubricating oil composition for industrial gears according to the present invention comprises a lubricant base oil (A), and a liquid random copolymer (B) of ethylene and α-olefin prepared by method (α) (may also be described in the present specification as "ethylene-α-olefin copolymer (B)"), the lubricating oil composition having a kinematic

viscosity at 40°C in a specific range.

< (A) Lubricant base oil >

The lubricant base oil (A) has the properties of (A1) to (A3) below.

(A1) The lubricant base oil has a kinematic viscosity at 100°C of 1 to 100 $mm^2/s$

The value of this kinematic viscosity is that as measured in accordance with the method described in JIS K2283. The kinematic viscosity at 100°C of the lubricant base oil (A) is 1 to 100 $mm^2/s$, preferably 1 to 10 $mm^2/s$, and more preferably 2 to 8 $mm^2/s$. With a kinematic viscosity at 100°C in this range, the lubricating oil composition of the present invention is excellent in terms of balance between volatility and temperature viscosity properties.

(A2) The lubricant base oil has a viscosity index of 100 or more

The value of this viscosity index is that as measured in accordance with the method described in JIS K2283. The viscosity index of lubricant base oil (A) is 100 or more, preferably 110 or more, and further preferably 120 or more. With a viscosity index in this range, the lubricating oil composition of the present invention has excellent temperature viscosity properties.

(A3) The lubricant base oil has a pour point of 0°C or lower

The value of this pour point is that as measured in accordance with the method described in ASTM D97. The pour point of lubricant base oil (A) is 0°C or lower, preferably -10°C or lower, more preferably -20°C or lower, and furthermore preferably -30°C or lower. With a pour point in this range, the lubricating oil composition of the present invention has excellent low-temperature viscosity properties.

In the lubricant base oil used in the present invention, performance and quality such as viscosity properties, heat resistance and oxidation stability, will differ depending on the producing and refining processes etc. of the lubricant base oil. In general, the lubricant base oil is classified broadly into a mineral oil and a synthetic oil. Moreover, the API (American Petroleum Institute) categorizes lubricant base oil into five types: Group I, II, III, IV and V. These API categories are defined in the API Publication 1509, 15th Edition, Appendix E, April 2002, and are as shown in Table 1. The lubricant base oil (A) may be either mineral oil or synthetic oil, and may be of any of the Groups I to V in the API categories. Details are described as follows.

Table 1

| Group | Type | Viscosity index *1 | Saturated hydrocarbon portion *2 (vol%) | Sulfur portion *3 (% by weight) |
|---|---|---|---|---|
| I | Mineral oil | 80 to 120 | < 90 | > 0.03 |
| II | Mineral oil | 80 to 120 | ≥ 90 | ≤ 0.03 |
| III | Mineral oil | ≥ 120 | ≥ 90 | ≤ 0.03 |
| IV | Poly-α-olefin | | | |
| V | Lubricant base material other than the aforementioned | | | |
| *1: Measured in accordance with ASTM D445 (JIS K2283)<br>*2: Measured in accordance with ASTM D3238<br>*3: Measured in accordance with ASTM D4294 (JIS K2541)<br>*4: Mineral oils whose saturated hydrocarbon portion is less than 90 volt and sulfur portion is less than 0.03% by weight, or whose saturated hydrocarbon portion is 90 vol% or more and sulfur portion exceeds 0.03% by weight, are included in Group I. | | | | |

< Mineral oil >

The mineral oil is ascribed to Groups I to III of the aforementioned API categories.

The quality of the mineral oil is as mentioned above, where the aforementioned respective qualities of mineral oil are obtainable depending on the refining method. Exemplifications of the mineral oil specifically include: a lubricant base oil, in which a lubricating oil fraction obtained by reduced pressure distillation of an atmospheric residue which is

obtainable by the atmospheric distillation of crude oil, is refined by one or more treatments such as solvent deasphalting, solvent extraction, hydrocracking, solvent dewaxing, hydrorefining; or a lubricant base oil of wax isomerized mineral oil.

Moreover, a Gas-to-Liquid (GTL) base oil obtained by the Fisher-Tropsch method is a base oil which can also be suitably utilized as Group III mineral oil. Such GTL base oil is also handled as Group III+ lubricant base oil, which are described e.g. in the following Patent Literatures: EP0776959, EP0668342, WO97/21788, WO00/15736, WO00/14188, WO00/14187, WO00/14183, WO00/14179, WO00/08115, WO99/41332, EP1029029, WO01/18156 and WO01/57166.

< Synthetic oil >

The synthetic oil is ascribed to Group IV or Group V of the aforementioned API categories.

Poly-α-olefins, which are ascribed to Group IV, can be obtained by oligomerizing higher α-olefins with an acid catalyst such as a boron trifluoride catalyst or a chromic acid catalyst, as described in US Patent No. 3,382,291, US Patent No. 3,763,244, US Patent No. 5,171,908, US Patent No. 3,780,128, US Patent No. 4,032,591, JP H01-163136 A, US Patent No. 4,967,032, and US Patent No. 4,926,004. Poly-α-olefins can also be obtained by processes using a catalyst system containing a complex of a transition metal such as zirconium, titanium or hafnium, which includes a metallocene compound as described in patent literatures, JP S63-037102 A, JP 2005-200447 A, JP 2005-200448 A, JP 2009-503147 A and JP 2009-501836 A. Of these, a low molecular weight oligomer of at least one olefin selected from an olefin having 6 or more carbon atoms can be utilized as the poly-α-olefin. If utilizing a poly-α-olefin as the lubricant base oil (A), a lubricating oil composition having remarkably excellent temperature viscosity properties, low-temperature viscosity properties, as well as heat resistance is obtainable.

Poly-α-olefins are also industrially available, where those with a 100°C kinematic viscosity of 2 $mm^2/s$ to 150 $mm^2/s$ are commercially available. Among these, the use of a poly α-olefin of 2 to 100 $mm^2/s$ is preferable from the perspective of obtaining a lubricating oil composition with excellent temperature viscosity properties. Examples include the NEXBASE 2000 series (made by NESTE), Spectrasyn (made by ExxonMobil Chemical), Durasyn (made by INEOS Oligomers), and Synfluid (made by Chevron Phillips Chemical).

As the synthetic oil ascribed to Group V, examples include alkyl benzenes, alkyl naphthalenes, isobutene oligomers and hydrides thereof, paraffins, polyoxy alkylene glycol, dialkyl diphenylether, polyphenylether, and esters.

Most of the alkyl benzenes and alkyl naphthalenes are usually dialkyl benzene or dialkyl naphthalene whose alkyl chain length has 6 to 14 carbon atoms, where such alkyl benzenes or alkyl naphthalenes are produced by the Friedel-Crafts alkylation reaction of benzene or naphthalene with olefin. In the production of alkyl benzenes or alkyl naphthalenes, the alkylated olefin to be utilized may be a linear or branched olefin, or may be a combination of these. These production processes are described in e.g. US Patent 3,909,432.

Moreover, as the ester, fatty acid esters are preferred from the perspective of compatibility with the ethylene-α-olefin copolymer (B).

Although there are no particular limitations on the fatty acid esters, examples include fatty acid esters consisting of only carbon, oxygen or hydrogen as mentioned below, where the examples include monoesters prepared from a monobasic acid and alcohol; diesters prepared from dibasic acid and alcohol, or from a diol with a monobasic acid or an acid mixture; or polyolesters prepared by reacting a monobasic acid or an acid mixture with a diol, triol (e.g. trimethylolpropane), tetraol (e.g. pentaerythritol), hexol (e.g. dipentaerythritol) etc. Examples of these esters include ditridecyl glutarate, di-2-ethyl hexyl adipate, diisodecyl adipate, ditridecyl adipate, di-2-ethyl hexyl sebacate, tridecyl pelargonate, di-2-ethyl hexyl adipate, di-2-ethyl hexyl azelate, trimethylolpropane caprylate, trimethylolpropane pelargonate, trimethylolpropane triheptanoate, pentaerythritol-2-ethyl hexanoate, pentaerythritol pelargonate, and pentaerythritol tetraheptanoate.

From the perspective of the compatibility with the ethylene-α-olefin copolymer (B), an alcohol having two or more functional hydroxyl groups is preferred as the alcohol moiety constituting the ester, and a fatty acid having 8 or more carbon atoms is preferred as the fatty acid moiety. However, a fatty acid having 20 or fewer carbon atoms, which is easily industrially available, is superior in terms of the manufacturing cost of the fatty acid. The effect of the present invention is also sufficiently exhibited with the use of one fatty acid constituting an ester, or with the use of a fatty acid ester prepared by means of two or more acid mixtures. Examples of fatty acid esters more specifically include a mixed triester of trimethylolpropane with lauric acid and stearic acid, and diisodecyl adipate, where these are preferable in terms of compatibility of saturated hydrocarbon components such as the ethylene-α-olefin copolymer (B), with stabilizers such as antioxidants, corrosion preventing agents, anti-wear agents, friction modifying agents, pour point lowering agents, anti-rust agents and anti-foamers mentioned below and having a polar group.

When utilizing a synthetic oil, particularly a poly-α-olefin as the lubricant base oil (A), it is preferable that the lubricating oil composition of the present invention contain a fatty acid ester in an amount of 5 to 20% by mass with respect to 100% by mass of the entire weight of the lubricating oil composition. By containing a fatty acid ester of 5% by mass or more, good compatibility is obtainable with the lubricating oil sealing material such as resins and elastomers

inside the internal combustion engines and industrial machinery of all types. Specifically, swelling of the lubricating oil sealing material can be suppressed. From the perspective of oxidation stability or heat resistance, the amount of ester is preferably 20% by mass or less. When mineral oil is contained in the lubricating oil composition, a fatty acid ester is not necessarily required, because the mineral oil *per se* has a swelling suppression effect of the lubricating oil sealing agent.

In the lubricating oil composition of the present invention, a synthetic oil or mineral oil may be used alone as the lubricant base oil (A), or any mixture etc. of two or more lubricating oils selected from the synthetic oil and mineral oil may be used as the lubricant base oil (A).

< (B) Ethylene-α-olefin copolymer >

The ethylene-α-olefin copolymer (B) is a liquid random copolymer (B) of ethylene and α-olefin prepared by the following method (α).

(Method (α))

A method (α) for preparing a liquid random copolymer of ethylene and α-olefin, comprising a step of carrying out solution polymerization of ethylene and α-olefin having 3 to 20 carbon atoms, under a catalyst system containing

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

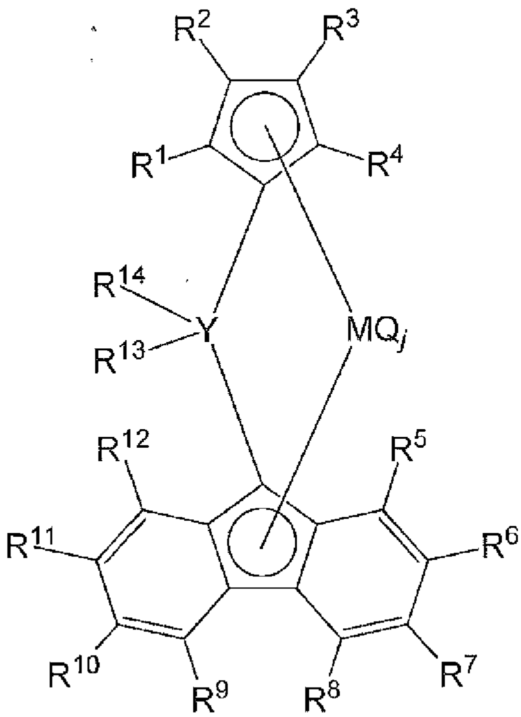

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure, wherein $R^2$ or $R^3$ bonded to the 3-position of the cyclopentadienyl group is a n-butyl group,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;

$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and preferably 6 to 15 carbon atoms.

Examples of the silicon-containing hydrocarbon group include an alkyl or aryl group having 3 to 20 carbon atoms which contains 1 to 4 silicon atoms, and in more detail includes trimethylsilyl group, tert-butyldimethylsilyl group, triphenylsilyl group etc.

In the metallocene compound represented by Formula 1, $R^6$ and $R^{11}$ bonded to fluorenyl group are the same, $R^7$ and $R^{10}$ are the same, but $R^6$, $R^7$, $R^{10}$ and $R^{11}$ are not hydrogen atom at the same time. In high-temperature solution polymerization of poly-$\alpha$-olefin, in order to improve the polymerization activity, preferably neither $R^6$ nor $R^{11}$ is hydrogen atom, and more preferably none of $R^6$, $R^7$, $R^{10}$ and $R^{11}$ is hydrogen atom. For example, $R^6$ and $R^{11}$ bonded to the 2-position and 7-position of the fluorenyl group are the same hydrocarbon group having 1 to 20 carbon atoms, and preferably all tert-butyl groups, and $R^7$ and $R^{10}$ are the same hydrocarbon group having 1 to 20 carbon atoms, and preferably all tert-butyl groups.

The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups ($R^{13}$ and $R^{14}$) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen ($sp^{2-}$ type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably $R^{13}$ and $R^{14}$ are the same in view of easy production.

In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.

Examples of such bridged metallocene compounds (a) include:

diphenylmethylene [$\eta^5$-(3-n-butyl cyclopentadienyl)] ($\eta^{5-}$ fluorenyl) zirconium dichloride, diphenylmethylene [$\eta^5$-(3-n-butyl cyclopentadienyl)] [$\eta^5$-(3,6-di-tert-butyl fluorenyl)] zirconium dichloride, diphenylmethylene [$\eta^5$-(3-n-butyl cyclopentadienyl)] [$\eta^5$-(2,7-di-tert-butyl fluorenyl)] zirconium dichloride, diphenylmethylene [$\eta^5$-(3-n-butyl cyclopentadienyl)] (octamethyl octahydrodibenzofluorenyl) zirconium dichloride, diphenylmethylene [$\eta^5$-(3-n-butyl cyclopentadienyl)] (benzofluorenyl) zirconium dichloride, diphenylmethylene [$\eta^5$-(3-n-butyl cyclopentadienyl)] (dibenzofluorenyl) zirconium dichloride, diphenylmethylene [$\eta^5$-(3-n-butyl cyclopentadienyl)] (octahydrodibenzofluorenyl) zirconium dichloride, diphenylmethylene [$\eta^5$-(3-n-butyl cyclopentadienyl)] [$\eta^5$-(2,7-diphenyl-3,6-di-tert-butyl fluorenyl)] zirconium dichloride, diphenylmethylene [$\eta^5$-(3-n-butyl cyclopentadienyl)] [$\eta^5$-(2,7-dimethyl-3,6-di-tert-butyl fluorenyl)] zirconium dichloride; and

di(p-tolyl) methylene [$\eta^5$-(3-n-butyl cyclopentadienyl)] ($\eta^5$-fluorenyl) zirconium dichloride, di(p-tolyl) methylene [$\eta^5$-(3-n-butyl cyclopentadienyl)] [$\eta^5$-(3,6-di-tert-butyl fluorenyl)] zirconium dichloride, di(p-tolyl) methylene [$\eta^5$-(3-n-butyl cyclopentadienyl)] [$\eta^5$-(2,7-di-tert-butyl fluorenyl)] zirconium dichloride, di(p-tolyl) methylene [$\eta^5$-(3-n-butyl cyclopentadienyl)] (octamethyl octahydrodibenzofluorenyl) zirconium dichloride, di(p-tolyl) methylene [$\eta^5$-(3-n-butyl cyclopentadienyl)] (benzofluorenyl) zirconium dichloride, di(p-tolyl) methylene [$\eta^5$-(3-n-butyl cyclopentadienyl)] (dibenzofluorenyl) zirconium dichloride, di(p-tolyl) methylene [$\eta^5$-(3-n-butyl cyclopentadienyl)] (octahydrodibenzofluorenyl) zirconium dichloride, di(p-tolyl) methylene [$\eta^5$-(3-n-butyl cyclopentadienyl)] (2,7-diphenyl-3,6-di-tert-butyl fluorenyl) zirconium dichloride, di(p-tolyl) methylene [$\eta^5$-(3-n-butyl cyclopentadienyl)] [$\eta^5$-(2,7-dimethyl-3,6-di-tert-butyl fluorenyl)] zirconium dichloride.

Although compounds whose zirconium atoms were substituted with hafnium atoms, or compounds whose

chloro ligands were substituted with methyl groups etc. are exemplified in these compounds, the bridged metallocene compound (a) is not limited to these exemplifications.

As the organoaluminum oxy-compound used in the catalyst system in the present invention, conventional aluminoxane can be used. For example, linear or ring type aluminoxane represented by the following Formulas 2 to 5 can be used. A small amount of organic aluminum compound may be contained in the organoaluminum oxy-compound.

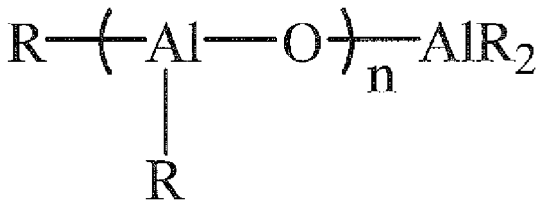

... (Formula 2)

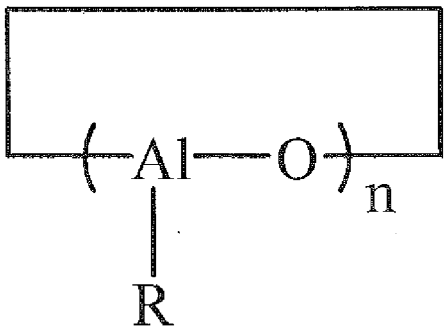

... (Formula 3)

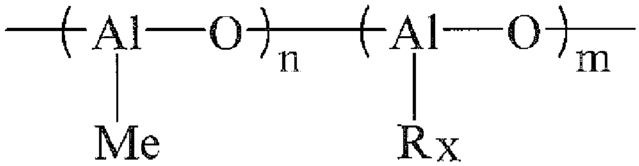

... (Formula 4)

In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50.

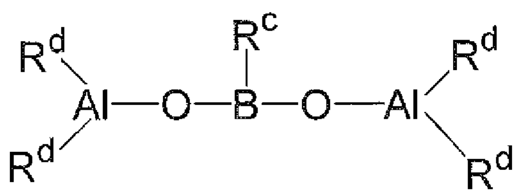

... (Formula 5)

In Formula 5, $R^c$ is a hydrocarbon group having 1 to 10 carbon atoms, and $R^d$ is independently a hydrogen atom, halogen atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the trimethyl aluminum as shown in US Patent 4960878 and US Patent 5041584, and for example, is prepared by using

trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form an ion pair (hereinafter, referred to as "ionic compound" as required) which is contained in the present catalyst system, a Lewis acid, ionic compounds, borane, borane compounds and carborane compounds can be used. These are described in patent literatures, Korean Patent No. 10-551147 A, JP H01-501950 A, JP H03-179005 A, JP H03-179006 A, JP H03-207703 A, JP H03-207704 A, US Patent 5321106 and so on. If needed, heteropoly compounds, and isopoly compound etc. can be used, and the ionic compound disclosed in JP 2004-51676 A can be used. The ionic compound may be used alone or by mixing two or more. In more detail, examples of the Lewis acid include the compound represented by $BR_3$ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound.

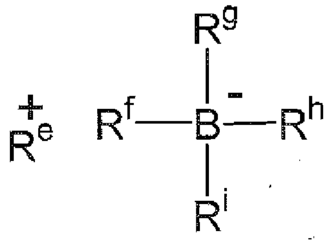

··· (Formula 6)

In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently an organic group, preferably a hydrocarbon group having 1 to 20 carbon atoms, and more preferably an aryl group, for example, a penta-fluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes (c) an organoaluminum compound when it is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

$$R^a_mAl(OR^b)_nH_pX_q \cdots \qquad \text{Formula 7}$$

In Formula 7, $R^a$ and $R^b$ each is independently a hydrocarbon group having 1 to 15 carbon atoms, preferably 1 to 4 carbon atoms, and X is a halogen atom, m is an integer of $0<m\leq3$, n is an integer of $0\leq n\leq3$, p is an integer of $0<p\leq3$, q is an integer of $0\leq q<3$, and $m+n+p+q=3$.

$$M^2AlR^a_4 \cdots \qquad \text{Formula 8}$$

In Formula 8, $M^2$ represents Li, Na or K, and $R^a$ is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include $LiAl(C_2H_5)_4$, $LiAl(C_7H_{15})_4$ etc. Compounds similar to the compounds represented by Formula 7 can be used. For example, like $(C_2H_5)_2AlN(C_2H_5)Al(C_2H_5)_2$, an organoaluminum compound to

which at least 2 aluminum compounds are bonded through nitrogen atoms, can be used.

In the method for preparing the ethylene-α-olefin copolymer (B), the amount of (a) the bridged metallocene compound represented by Formula 1 is preferably 5 to 50% by weight with respect to total catalyst composition. Moreover, preferably the amount of (b) (i) the organoaluminum oxy-compound is 50 to 500 equivalent weight with respect to the molar number of the bridged metallocene compound to be used, the amount of (b) (ii) the compound which reacts with the bridged metallocene compound to form an ion pair is 1 to 5 equivalent weight with respect to the molar number of bridged metallocene compound to be used, and the amount of (c) the organoaluminum compound is 5 to 100 equivalent weight with respect to the molar number of the bridged metallocene compound to be used.

The catalyst system used in the present invention may have the following [1] to [4] for example.

[1] (a) the bridged metallocene compound represented by Formula 1, and (b) (i) the organoaluminum oxy-compound.
[2] (a) the bridged metallocene compound represented by Formula 1, (b) (i) the organoaluminum oxy-compound and (c) the organoaluminum compound.
[3] (a) the bridged metallocene compound represented by Formula 1, (b) (ii) the compound which reacts with the bridged metallocene compound to form an ion pair, and (c) the organoaluminum compound.
[4] (a) the bridged metallocene compound represented by Formula 1, and (b) (i) the organoaluminum oxy-compound and (ii) the compound which reacts with the bridged metallocene compound to form an ion pair.
(a) The bridged metallocene compound represented by Formula 1 (element (a)), (b) (i) the organoaluminum oxy-compound (element (b)), (ii) the compound which reacts with the bridged metallocene compound to form an ion pair and/or (c) the organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (B) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 kgf/cm$^2$ and preferably atmospheric pressure to 50 kgf/cm$^2$, which can vary in accordance with reacting materials, reacting conditions, etc.

Batch-, semi-continuous- or continuous-type polymerization can be carried out, and continuous-type polymerization is preferably carried out.

The ethylene-α-olefin copolymer (B) is in liquid phase at room temperature, and has a structure where the α-olefin units are uniformly distributed in the copolymer chain. The ethylene-α-olefin copolymer (B) comprises e.g. 60 to 40 mol%, preferably 45 to 55 mol%, of ethylene units derived from ethylene, and further comprises e.g. 40 to 60 mol%, preferably 45 to 55 mol%, of α-olefin units having 3 to 20 carbon atoms which are derived from α-olefin having 3 to 20 carbon atoms.

The number average molecular weight (Mn) of the ethylene-α-olefin copolymer (B) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene-α-olefin copolymer (B) has a kinematic viscosity at 100°C of e.g. 30 to 5,000 and preferably 50 to 3,000 mm$^2$/s, a pour point of e.g. 30 to -45°C and preferably 20 to -35°C, and a Bromine Number of 0.1 g / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene-α-olefin copolymer (B). Moreover, since the ethylene-α-olefin copolymer (B) has a high random copolymerization, it has a controlled molecular weight distribution, and thus has excellent shear stability and viscosity properties. Therefore, it is considered that the lubricating oil composition for industrial gears of the present invention containing the ethylene-α-olefin copolymer (B) has remarkably excellent temperature viscosity properties, namely, has oil film retention properties at high temperatures and low-temperature viscosity properties, and further has excellent thermal and oxidation stability.

< Lubricating oil composition for industrial gears >

The lubricating oil composition for industrial gears according to the present invention contains the lubricant base oil (A) and the ethylene-$\alpha$-olefin copolymer (B), and has the property of the below (C1).

(C1) The lubricating oil composition for industrial gears has a kinematic viscosity at 40°C of 100 to 10,000 $mm^2/s$

The kinematic viscosity at 40°C (i.e. the kinematic viscosity as measured in accordance with the method described in JIS K2283) is 100 to 10,000 $mm^2/s$, preferably 250 to 8,000 $mm^2/s$, more preferably 250 to 5,000 $mm^2/s$, and furthermore preferably 500 to 4,000 $mm^2/s$. If the kinematic viscosity at 40°C of the lubricating oil composition for industrial gears is much more than 10,000 $mm^2/s$, the agitation torque rises when stirring the lubricating oil composition, and hence the energy conservation performance of machinery with gears utilizing the lubricating oil composition worsens. If the kinematic viscosity at 40°C is much lower than 10 $mm^2/s$, the oil film retention of the lubricating oil composition cannot be maintained, and hence sufficient lubricity is not obtainable.

Generally, the viscosity of industrial lubricating oil products is stipulated according to 40°C kinematic viscosity, and viscosity ranges are defined by JIS K2001 (in accordance with ISO3448). The permissible range is set at ± 10% for each viscosity. For example, if a lubricating oil with a 40°C kinematic viscosity of 320 $mm^2/s$ is indicated as ISO VG320, the permitted range of the 40°C kinematic viscosity is 288 to 352 $mm^2/s$. Although the optimal range differs depending on the sites where gears are utilized as well as usage conditions, ISO VG150 to ISO VG3200 is preferably utilized for gear oil. When comparing performance, lubricating oil compositions of equal viscosity grades are usually compared.

The lubricating oil composition for industrial gears according to the present invention preferably further has the property (C2).

(C2) The lubricating oil composition for industrial gears has a viscosity index of 130 or more

This viscosity index (i.e. as measured in accordance with the method described in JIS K2283) is preferably 130 or more, more preferably 150 or more, furthermore preferably 170 or more, and particularly preferably 180 or more. With a viscosity index in this range, the lubricating oil composition has excellent temperature viscosity properties.

Generally, as the 40°C kinematic viscosity increases, there is a tendency for the viscosity index to also increase. Hence, the viscosity index range also changes depending on the 40°C kinematic viscosity, and is preferably within the range represented in the following Formula (1), and furthermore preferably within the range represented in the following Formula (2).

$$Y \geq 17.64\ LN(X) + 58.8 \ \ldots\ \text{Formula (1)}$$

$$Y \geq 17.64\ LN(X) + 68.8 \ \ldots\ \text{Formula (2)}$$

(wherein Y indicates the viscosity index, and X indicates the 40°C kinematic viscosity (unit: $mm^2/s$).

The pour point of the lubricating oil composition for industrial gears according to the present invention (i.e. the pour point as measured by the method described in ASTM D97) is preferably 0°C or lower, preferably -10°C or lower, and furthermore preferably -20°C or lower. A low pour point shows excellent low-temperature properties of the lubricating oil composition.

As the 40°C kinematic viscosity increases, there is also a tendency for the pour point to increase. Hence, the viscosity index range also changes depending on the 40°C kinematic viscosity, and is preferably within the range represented in the following Formula (3), and furthermore preferably within the range represented in the following Formula (4).

$$Z \leq 10.29\ LN(X) - 82.4 \ \cdots\ \text{Formula (3)}$$

$$Z \leq 10.29\ LN(X) - 87.4 \ \cdots\ \text{Formula (4)}$$

(wherein Z indicates the pour point (unit: degrees), and X indicates the 40°C kinematic viscosity (unit: $mm^2/s$).

The aforementioned Formulae (1) to (4) were derived based on the data of the below-mentioned Examples.

The lubricating oil composition for industrial gears of the present invention contains the components in the ratio

of 10 to 90% by mass of the lubricant base oil (A), and 90 to 10% by mass of the ethylene-α-olefin copolymer (B), wherein the total of the lubricant base oil (A) and the ethylene-α-olefin copolymer (B) is 100% by mass. The lubricating oil composition for industrial gears of the present invention contains the components in the ratios of: preferably 20 to 90% by mass of the lubricant base oil (A) and 80 to 10% by mass of the ethylene-α-olefin copolymer (B); more preferably 30 to 85% by mass of the lubricant base oil (A) and 70 to 15% by mass of the ethylene-α-olefin copolymer (B); and furthermore preferably 40 to 80% by mass of the lubricant base oil (A) and 60 to 20% by mass of the ethylene-α-olefin copolymer (B).

A preferable embodiment includes an aspect where 30 to 100% by mass of a lubricant base oil is a mineral oil. With a high ratio of the mineral oil in the lubricant base oil (A), there is excellent dissolvability of the below-mentioned additives, as well as superior economy since the mineral oil is easily obtained. It is more preferable for 50 to 100% by mass to be the mineral oil, and furthermore preferable for 80 to 100% by mass to be the mineral oil. Of the mineral oils, those of Group III in the API category are preferable because of excellent temperature viscosity properties, and because a balance can be found between oil film retention at high temperatures and low torque at low temperatures.

Another preferable embodiment includes an aspect where 30 to 100% by mass of a lubricant base oil is a synthetic oil, and the synthetic oil is a poly-α-olefin and/or an ester oil. A high ratio of the synthetic oil in the lubricant base oil (A) is preferable because of excellent thermal resistance, temperature viscosity properties and low-temperature properties. It is more preferable for 50 to 100% by mass to be the synthetic oil, and furthermore preferable for 80 to 100% by mass to be the synthetic oil.

Moreover, additives such as extreme pressure agents, detergent dispersants, viscosity index improving agents, antioxidants, corrosion preventing agents, anti-wear agents, friction modifying agents, pour point lowering agents, anti-rust agents and anti-foamers may be contained in the lubricating oil composition for automobile industrial gears of the present invention.

Below are exemplifications of additives which can be utilized in the lubricating oil composition of the present invention, where these can be used alone, or used in combination of two or more.

The extreme pressure agent is the generic name for agents having a seizure preventing effect when the metals of gears and the like are exposed to a high load condition, and although there are no particular limitations on the agent, sulfur-based extreme pressure agents such as sulfides, sulfoxides, sulfones, thiophosphinates, thiocarbonates, sulfurized oils and sulfurized olefins; phosphoric acids such as phosphate esters, phosphite esters, phosphate ester amine salts, and phosphite ester amines; and halogen-based compounds such as chlorinated hydrocarbons can be exemplified. Moreover, two or more types of these compounds may be used together.

Until extreme pressure lubricating conditions are attained, hydrocarbon or other organic components constituting lubricating oil composition may become carbonized before reaching extreme pressure lubricating conditions due to heating or shearing, and thus there is a possibility that a carbide film could be formed on a metal surface. Therefore, with the use of the extreme pressure agent alone, contact of a metal surface with the extreme pressure agent could be inhibited due to the carbide film, and thus a possibility that a sufficient effect of the extreme pressure agent cannot be expected.

Although the extreme pressure agent may be added alone, because a saturated hydrocarbon such as the copolymer constitutes a main component in the industrial gear oil in the present invention, from the perspective of dispersibility, it is preferable to add the agent to the lubricant base oil such as mineral oil or synthetic hydrocarbon oil, together with the other additives to be used, in a dissolved state beforehand. Specifically, more preferable is a method of selecting the so-called additive package to be added to the lubricating oil composition, in which the various components such as the extreme pressure agent components are mixed in advance, and further dissolved in the lubricant base oil such as mineral oil or synthetic hydrocarbon oil.

Preferred additive packages include Anglamol-98A, Anglamol-6043, Angramol 6085U and LUBRIZOL 1047U (made by LUBRIZOL), HITEC 1532 (made by AFTON CHEMICAL), HITEC 307 (made by AFTON CHEMICAL), HITEC 3339 (made by AFTON CHEMICAL), and Additin RC 9410 (made by RHEIN CHEMIE).

The extreme pressure agent may be used as required in a range of 0 to 10% by mass, to 100% by mass of the lubricating oil composition.

Exemplifications of the anti-wear agent include inorganic or organic molybdenum compounds such as molybdenum disulfide, graphite, antimony sulfide, and polytetrafluoroethylene. The anti-wear agent may be used as required in a range of 0 to 3% by mass with respect to 100% by mass of the lubricating oil composition.

Exemplifications of the friction modifying agent include amine compounds, imide compound, fatty acid esters, fatty acid amides, and fatty acid metal salts having at least one alkyl group or alkenyl group having 6 to 30 carbon atoms, particularly linear alkyl groups or linear alkenyl groups having 6 to 30 carbon atoms, in a molecule.

Exemplifications of the amine compound include a linear- or branched-, preferably linear-, aliphatic monoamine, or a linear- or branched-, preferably linear-, aliphatic polyamine having 6 to 30 carbon atoms, or alkylene oxide adducts of these aliphatic amines. Examples of the imide compound include imide succinate with linear- or branched- alkyl group or alkenyl group having 6 to 30 carbon atoms and/or compounds thereof modified by a carboxylic acid, boric acid, phosphoric acid, sulfuric acid etc. Exemplifications of the fatty acid ester include esters of a linear- or branched-, preferably

linear-, fatty acid having 7 to 31 carbon atoms with an aliphatic monohydric alcohol or aliphatic polyhydric alcohol. Exemplifications of the fatty acid amide include amides of a linear- or branched-, preferably linear-, fatty acid having 7 to 31 carbon atoms with an aliphatic monoamine or aliphatic polyamine. Examples of fatty acid metal salts include alkaline-earth metal salts (e.g. magnesium salts and calcium salts) and zinc salts of a linear- or branched-, preferably linear-, fatty acid having 7 to 31 carbon atoms.

The friction modifying agent may be used as required in a range of 0.01 to 5.0% by mass with respect to 100% by mass of the lubricating oil composition.

Exemplifications of the detergent dispersants include metal sulfonates, metal phenates, metal phosphonates, and imide succinate. The detergent dispersant may be used as required in a range of 0 to 15% by mass with respect to 100% by mass of the lubricating oil composition.

In addition to ethylene-α-olefin copolymers (excluding the ethylene-α-olefin copolymer (B)), known viscosity index improving agents such as olefin copolymers whose molecular weights exceed 50,000, poly-α-olefins with a 100°C kinematic viscosity of 101 $mm^2/s$ or more, methacrylate-based copolymers and liquid polybutene, can be used together as the viscosity index improving agent. The viscosity index improving agent may be used as required in a range of 0 to 50% by mass with respect to 100% by mass of the lubricating oil composition.

Examples of the antioxidant include phenol-based or amine-based compounds such as 2,6-di-t-butyl-4-methylphenol. The antioxidant may be used as required in a range of 0 to 3% by mass with respect to 100% by mass of the lubricating oil composition.

Examples of the corrosion preventing agent include compounds such as benzotriazole, benzoimidazole, and thiadiazole. The corrosion preventing agent may be used as required in a range of 0 to 3% by mass with respect to 100% by mass of the lubricating oil composition.

Examples of the anti-rust agent include compounds such as amine compounds, carboxylic acid metal salts, polyhydric alcohol esters, phosphorus compounds, and sulfonates. The anti-rust agent may be used as required in a range of 0 to 3% by mass with respect to 100% by mass of the lubricating oil composition.

Exemplifications of the anti-foamer include siliconebased compounds such as dimethyl siloxane and silica gel dispersions, and alcohol- or ester-based compounds. The anti-foamer may be used as required in a range of 0 to 0.2% by mass with respect to 100% by mass of the lubricating oil composition.

A variety of known pour point lowering agents may be used as the pour point lowering agent. Specifically, high molecular compounds containing an organic acid ester group may be used, and in particular, vinyl polymers containing an organic acid ester group are suitably used. Examples of the vinyl polymer containing an organic acid ester group include (co)polymers of methacrylic acid alkyl, (co)polymers of acrylic acid alkyl, (co)polymers of fumaric acid alkyl, (co)polymers of maleic acid alkyl, and alkylated naphthalene.

Such pour point lowering agents have a melting point of -13°C or lower, preferably -15°C, and furthermore preferably -17°C or lower. The melting point of the pour point lowering agent is measured by means of differential scanning calorimetry (DSC). Specifically, a sample of about 5 mg is packed into an aluminum pan and temperature is raised to 200°C, where the temperature is maintained at 200°C for 5 minutes. This is then cooled at 10°C/minute until reaching - 40°C, where the temperature is maintained at -40°C for 5 minutes. The temperature is then raised at 10°C/minute during which the melting point is obtained from the heat absorption curve.

The pour point lowering agent has a polystyrene conversion weight average molecular weight obtainable by gel permeation chromatography in the range of 20,000 to 400,000, preferably 30,000 to 300,000, more preferably 40,000 to 200,000.

The pour point lowering agent may be used as required in a range of 0 to 2% by mass with respect to 100% by mass of the lubricating oil composition.

In addition to the aforementioned additives, antiemulsifying agents, coloring agents, oiliness agents (oiliness improving agents) and the like may also be used as required.

< Use >

The lubricating oil composition of the present invention can be suitably utilized in the industrial gear oil of a variety of industrial equipment machinery, and this composition has remarkably excellent temperature viscosity properties; namely, oil film retention properties at high temperatures and low-temperature viscosity properties, and can greatly contribute to the energy conservation of industrial equipment machinery. In particular, the lubricating oil composition of the present invention is remarkably useful as gear oil for wind power generation, and gear oil for machine tools and molding machines.

Examples

The present invention is further specifically explained based on the below Examples. However, the present

invention is not limited to these Examples.

[Evaluation method]

In the below Examples and Comparative Examples etc., the physical properties etc. of the ethylene-α-olefin copolymer and the industrial gear oil were measured by the below methods.

< Ethylene content (mol%) >

Using a Fourier transform infrared spectrometer FT/IR-610 or FT/IR-6100 (made by JASCO), the absorbance ratio of the absorption in the vicinity of 721 $cm^{-1}$ based on the horizontal vibration of the long chain methylene group, and the absorption in the vicinity of 1155 $cm^{-1}$ based on the skeletal vibration of propylene (D1155 $cm^{-1}$ / D721 $cm^{-1}$) was calculated, and the ethylene content (% by weight) was obtained by the calibration curve created beforehand (created using the ASTM D3900 reference sample). Using the ethylene content (% by weight) thus obtained, the ethylene content (mol%) was obtained according to the following Formula.

$$\text{Ethylene content (mol\%)} = \frac{[\text{ethylene content (\% by weight)} / 28]}{[\text{ethylene content (\% by weight)} / 28] + [\text{propylene content (\% by weight)} / 42]}$$

< B-value >

Employing o-dichloro benzene / benzene-$d_6$ (4/1 [vol/vol%]) as a measurement solvent, the $^{13}$C-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 usec (45° pulse), or under the measuring conditions (125 MHz, AVANCE III Cryo-500 made by Bruker Biospin Inc) of temperature of 120°C, spectral width of 250 ppm, pulse repeating time of 5.5 seconds, and a pulse width of 5.0 usec (45° pulse), and the B-value was calculated based on the following Formula [1]. The peak attribution was performed by reference to the aforementioned known literature.

$$B = \frac{P_{OE}}{2 P_O \cdot P_E} \quad \cdots [1]$$

In Formula [1], $P_E$ indicates the molar fraction contained in the ethylene component, $P_O$ indicates the molar fraction contained in the α-olefin component, and $P_{OE}$ indicates the molar fraction of the ethylene-α-olefin sequences of all dyad sequences.

< Molecular weight distribution >

Employing the HLC-8320 GPC (gel permeation chromatography) device produced by Tosoh Corporation, the molecular weight distribution was measured as below. Four TSK gel Super Multipore HZ-M columns were used as separation columns, the column temperature was 40°C, tetrahydrofuran (made by Wako Pure Chemical Industries) was used as the mobile phase, with a development rate of 0.35 ml/minute, a sample concentration of 5.5 g/L, a sample injection amount of 20 microliters, and a differential refractometer was used as a detector. PStQuick MP-M; made by Tosoh Corporation) was used as the reference polystyrene. In accordance with general-purpose calibration procedures, weight average molecular weight (Mw) and number average molecular weight (Mn) were calculated in terms of polystyrene molecular weight, and the molecular weight distribution (Mw/Mn) was calculated from those values.

< Viscosity properties >

The 100°C kinematic viscosity, 40°C kinematic viscosity and the viscosity index were measured and calculated by the method described in JIS K2283.

< Pour point >

The pour point was measured by the method described in ASTM D97. Pour points lower than -50°C were described as -50°C or lower.

< -40°C viscosity >

Low-temperature viscosity properties were conducted in accordance with ASTM D2983, and the -40°C viscosity was measured at -40°C with a Brookfield viscometer.

< Thermal and oxidation stability >

Regarding thermal and oxidation stability, a test was conducted in accordance with the Oxidation Stability Test of Lubricating Oil for Internal Combustion Engines (ISOT) method described in JIS K2514, and the lacquer rating was evaluated 72 hours after the test time.

[Production of ethylene-α-olefin copolymer (B)]

Ethylene-α-olefin copolymers (B) were prepared in accordance with the Polymerization Examples below.

[Polymerization Example 1]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of diphenylmethylene [$\eta^5$-(3-n-butyl cyclopentadienyl)] [$\eta^5$-(2,7-di-tert-butyl fluorenyl)] zirconium dichloride, and 0.002 mmol of N,N-dimethylanilinium tetrakis (pentafluorophenyl) borate were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The resulting polymer had an ethylene content of 49.5 mol%, an Mw of 5,100, an Mw/Mn of 1.7, a B-value of 1.2, and a 100°C kinematic viscosity of 150 $mm^2/s$.

[Polymerization Example 2]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of diphenylmethylene [$\eta^5$-(3-n-butyl cyclopentadienyl)] [$\eta^5$-(2,7-di-tert-butyl fluorenyl)] zirconium dichloride, and 0.001 mmol of N,N-dimethylanilinium tetrakis (pentafluorophenyl) borate were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 52.9 mol%, an Mw of 8,600, an Mw/Mn of 1.8, a B-value of 1.2, and a 100°C kinematic viscosity of 600 $mm^2/s$.

[Polymerization Example 3]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 0.023 mmol of N,N-dimethylanilinium tetrakis (pentafluorophenyl) borate and 0.00230 mmol of diphenylmethylene [$\eta^5$-(3-n-butyl cyclopentadienyl)] [$\eta^5$-(2,7-di-tert-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.4 mol%, an Mw of 13,600, an Mw/Mn of 1.9, a B-value of 1.2, and a 100°C kinematic viscosity of 2,000 $mm^2$/s.

[Polymerization Example 4]

760 ml of heptane and 120 g of propylene were charged into a stainless steel autoclave with a volume of 2 L sufficiently substituted with nitrogen, and the temperature in the system was raised to 150°C, and then 0.85 MPa of hydrogen and 0.19 MPa of ethylene were supplied to raise the total pressure to 3 MPaG. Then, 0.4 mmol of triisobutyl aluminum, 0.0002 mmol of dimethylsilyl bis(indenyl) zirconium dichloride, and 0.059 mmol of MMAO were injected with nitrogen, and polymerization was started by stirring with a rotation of 400 rpm. Ethylene was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried at 80°C under reduced pressure for 10 hours. The resulting polymer had an ethylene content of 48.5 mol%, an Mw of 5,000, an Mw/Mn of 1.8, a B-value of 1.2, and a 100°C kinematic viscosity of 150 $mm^2$/s.

[Polymerization Example 5]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of dimethylsilyl bis(indenyl) zirconium dichloride, and 0.029 mmol of MMAO were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 53.3 mol%, an Mw of 8,500, an Mw/Mn of 1.9, a B-value of 1.2, and a 100°C kinematic viscosity of 600 $mm^2$/s.

[Polymerization Example 6]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into a polymerization vessel, and 0.688 mmol of MMAO and 0.00230 mmol of dimethylsilyl bis(indenyl) zirconium dichloride, which were pre-mixed in toluene for 15 minutes or more, were charged into a polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.1 mol%, an Mw of 13,800, an Mw/Mn of 2.0, a B-value of 1.2, and a 100°C kinematic viscosity of 2,000 $mm^2$/s.

The copolymer obtained by Polymerization Example 1, the copolymer obtained by Polymerization Example 2, the copolymer obtained by Polymerization Example 3, the copolymer obtained by Polymerization Example 4, the copolymer obtained by Polymerization Example 5, and the copolymer obtained by Polymerization Example 6, are respectively described below as Polymer 1, Polymer 2, Polymer 3, Polymer 4, Polymer 5, and Polymer 6.

[Preparation of lubricating oil composition for industrial gears]

The components used other than the ethylene-α-olefin copolymer in the preparation of the below lubricating oil compositions are as follows.

Lubricant base oil;

The below lubricant base oils were used as the mineral oils.

Mineral oil-A: API (American Petroleum Institute) Group III mineral oil with a 100°C kinematic viscosity of 6.5 $mm^2/s$, a viscosity index of 131, and a pour point of -12.5°C (Yubase-6; made by SK Lubricants),
Mineral oil-B: API (American Petroleum Institute) Group I mineral oil with a 100°C kinematic viscosity of 6.8 $mm^2/s$, a viscosity index of 108, and a pour point of -12.5°C (Super Oil N-32, made by JX Nippon Oil & Energy Corporation),

Moreover, the below lubricant base oils were used as the synthetic oils.

Synthetic oil-A: Synthetic oil poly-α-olefin with a 100°C kinematic viscosity of 4.0 $mm^2/s$, a viscosity index of 123, and a pour point of -50°C or lower (NEXBASE 2004; made by Neste),
Synthetic oil-B: Synthetic oil poly-α-olefin with a 100°C kinematic viscosity of 5.8 $mm^2/s$, a viscosity index of 138, and a pour point of -50°C or lower (NEXBASE 2006; made by Neste, synthetic oil-A), and
Synthetic oil-C: Ester-based synthetic oil trimethylolpropane caprylate (TMTC) with a 100°C kinematic viscosity of 4.5 $mm^2/s$, a viscosity index of 142, and a pour point -50°C or lower, (SYNATIVE™ ES TMTC, made by Cognis).

In addition to the lubricant base oil and ethylene-α-olefin copolymer, the below types of additives were used.

Pour point lowering agent - A; IRGAFLOW 720P made by BASF
Pour point lowering agent - B; IRGAFLOW 649P made by BASF
Additive package - A; HITEC-3339 made by AFTON CHEMICAL,
Additive package - B; Anglamol-6085U made by LUBRIZOL,
Additive package - C; LUBRIZOL 1047U made by LUBRIZOL,
Antioxidant; Phenol-based antioxidant (Irganox L135 made by BASF), and
Polybutene; Liquid polybutene with a weight average molecular weight of 8,400 and a 100°C kinematic viscosity of 3,800 $mm^2/s$, as measured by GPC in the same way as the ethylene-α-olefin copolymer (Nisseki Polybutene HV-1900 made by JX Nippon Oil & Energy Corporation).

< Lubricating oil composition for industrial gears >

[Example 1]

Synthetic oil-A was used as the lubricant base oil (A), and the copolymer obtained in Polymerization Example 2 (Polymer 2) was used as the ethylene-α-olefin copolymer (B). These were mixed together with an antioxidant and adjusted to 100% by mass, thereby preparing a lubricating oil composition for industrial gear oil. The addition amounts of the respective components are as shown in Table 2. The physical properties of the lubricating oil composition are shown in Table 2.

[Examples 2 to 14, Comparative Examples 1 to 9]

Except for changing the types of components and addition amounts to those as described in Table 2, the lubricating oil compositions for industrial gears were prepared in the same way as in Example 1. The physical properties etc. of the obtained lubricating oil compositions are as shown in Table 2.

Table 2

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Polymer 1 | %by mass | | | | | | | 48.0 | | | 56.0 | | |
| Polymer 2 | % by mass | 21.0 | | 24.0 | | 25.0 | | | 31.0 | | | 37.0 | |
| Polymer 3 | % by mass | | 16.0 | | 17.0 | | 18.0 | | | 23.0 | | | 27.0 |
| Polymer 4 | %by mass | | | | | | | | | | | | |
| Polymer 5 | %by mass | | | | | | | | | | | | |
| Polymer 6 | %by mass | | | | | | | | | | | | |
| Polybutene | %by mass | | | | | | | | | | | | |
| Mineral oil -A | % by mass | | | | | 73.0 | 80.0 | | 67.5 | 75.5 | | | |
| Mineral oil - B | % by mass | | | | | | | 51.5 | | | 42.5 | 61.5 | 71.5 |
| Synthetic oil - A | % by mass | 78.8 | 83.8 | | | | | | | | | | |
| Synthetic oil - B | % by mass | | | 64.8 | 71.8 | | | | | | | | |
| Synthetic oil - C | %by mass | | | | | | | | | | | | |
| Antioxidant | % by mass | 0.2 | 0.2 | | | | | | | | | | |
| Additive Package - A | %by mass | | | 1.2 | 1.2 | | | | | | | | |
| Additive Package - B | % by mass | | | | | 1.5 | 1.5 | | | | | | |

(continued)

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Additive Package - C | % by mass | | | | | | | 1.0 | 1.0 | 1.0 | 1.0 | 1.0 | 1.0 |
| Pour point lowering agent - A | % by mass | | | | | 0.5 | 0.5 | | | | | | |
| Pour point lowering agent - B | % by mass | | | | | | | 0.5 | 0.5 | 0.5 | 0.5 | 0.5 | 0.5 |
| 40°C kinematic viscosity | $mm^2/s$ | 148 | 160 | 228 | 239 | 230 | 226 | 325 | 325 | 338 | 455 | 468 | 462 |
| Viscosity index | - | 166 | 175 | 169 | 175 | 168 | 171 | 164 | 16b | 172 | 155 | 173 | 178 |
| Pour point | °C | -43 | -45 | -40 | -40 | -35 | -33 | -25 | -25 | -25 | -23 | -24 | -23 |
| -40°C viscosity | mPa·s | 75,000 | 77,000 | 160,000 | 130,000 | | | | | | | | |
| ISOT | Lacquer rating | Adhered substance (thin) | Adhered substance (thin) | Adhered substance (thin) | Adhered substance (thin) | Adhered substance (medium) | Adhered substance (medium) | Adhered substance (medium) | Adhered substance (medium) | Adhered substance (medium) | Adhered substance (medium) | Adhered substance (medium) | Adhered substance (medium) |

Table 2 (continued)

| | | Ex. 13 | Ex. 14 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 9 | Comp. Ex. 9 |
|---|---|---|---|---|---|---|---|---|---|---|---|---|
| Polymer 1 | %by mass | | | | | | | | | | | |
| Polymer 2 | % by mass | 48.0 | | | | | | | | | | |
| Polymer 3 | % by mass | | 35.0 | | | | | | | | | |
| Polymer 4 | % by mass | | | | | 48.0 | | | | | | |
| Polymer 5 | % by mass | | | 21.0 | | | 31.0 | | 48.0 | | | |
| Polymer 6 | % by mass | | | | 16.0 | | | 23.0 | | 35.0 | | |
| Polybutene | % by mass | | | | | | | | | | 24.0 | 24.0 |
| Mineral oil -A | % by mass | | | | | | 67.5 | 75.5 | | | | 74.5 |
| Mineral oil - B | % by mass | | | | | 51.5 | | | | | | |
| Synthetic oil - A | % by mass | 40.5 | 53.5 | 78.8 | 83.8 | | | | 40.5 | 53.5 | | |
| Synthetic oil - B | % by mass | | | | | | | | | | 64.8 | |
| Synthetic oil - C | % by mass | 10.0 | 10.0 | | | | | | 10.0 | 10.0 | 10.0 | |
| Antioxidant | % by mass | | | 0.2 | 0.2 | | | | | | | |
| Additive Package - A | % by mass | | | | | | | | | | 1.2 | |
| Additive Package - B | % by mass | 1.5 | 1.5 | | | | | | 1.5 | 1.5 | | |

(continued)

| | | Ex. 13 | Ex. 14 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 9 | Comp. Ex. 9 |
|---|---|---|---|---|---|---|---|---|---|---|---|---|
| Additive Package - C | % by mass | | | | | 1.0 | 1.0 | 1.0 | | | | 1.0 |
| Pour point lowering agent - A | %by mass | | | | | | | | | | | |
| Pour point lowering agent - B | % by mass | | | | | 0.5 | 0.5 | 0.5 | | | | |
| 40°C kinematic viscosity | $mm^2/s$ | 695 | 662 | 147 | 162 | 324 | 325 | 336 | 698 | 658 | 225 | 221 |
| Viscosity index | - | 190 | 199 | 166 | 175 | 154 | 165 | 172 | 191 | 197 | 150 | 144 |
| Pour point | °C | -25 | -30 | -43 | -46 | -25 | -25 | -25 | -29 | -30 | -38 | -30 |
| -40°C viscosity | mPa·s | | | 76,000 | 75,000 | | | | | | 190,000 | |
| ISOT | Lacquer rating | Adhered substance (thin) | Adhered substance (thin) | Adhered substance (thick) | Adhered substance (thick) | Adhered substance (thick) | Adhered substance (thick) | Adhered substance (thick) | Adhered substance (thick) | Adhered substance (thick) | Adhered substance (thick) | Adhered substance (thick) |

## Claims

**1.** A lubricating oil composition for industrial gears, comprising

10 to 90% by mass of a lubricant base oil (A) having the properties of the below (A1) to (A3), and
90 to 10% by mass of a liquid random copolymer (B) of ethylene and $\alpha$-olefin, the liquid random copolymer (B) being prepared by the below method ($\alpha$), wherein the total amount of the lubricant base oil (A) and the copolymer (B) is 100% by mass,
the lubricating oil composition for industrial gears having the property of the below (c1):

(A1) The lubricant base oil has a kinematic viscosity at 100°C of 1 to 100 $mm^2/s$,
(A2) The lubricant base oil has a viscosity index of 100 or more,
(A3) The lubricant base oil has a pour point of 0°C or lower,
(c1) The lubricating oil composition for industrial gears has a kinematic viscosity at 40°C of 100 to 10,000 $mm^2/s$,
(Method ($\alpha$))

A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

(a) a bridged metallocene compound represented by the 1 following Formula 1, and
(b) at least one compound selected from a group consisting of

(i) an organoaluminum oxy-compound, and
(ii) a compound which reacts with the bridged metallocene compound to form an ion pair,

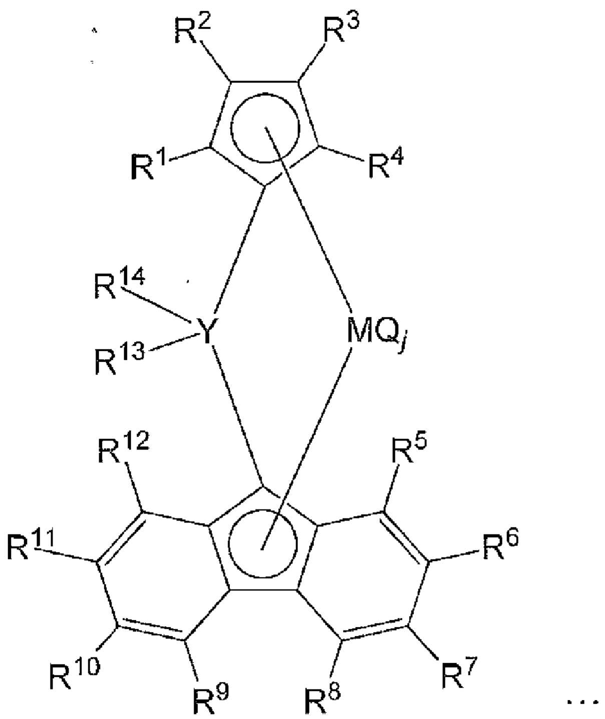

... (Formula 1)

wherein, in Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,
wherein $R^2$ or $R^3$ bonded to the 3-position of the cyclopentadienyl group is a n-butyl group,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,

$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.

2. The lubricating oil composition for industrial gears according to Claim 1, wherein $R^6$ and $R^{11}$, being the same, are hydrocarbon groups having 1 to 20 carbon atoms, preferably wherein $R^6$ and $R^{11}$ are all tert-butyl groups.

3. The lubricating oil composition for industrial gears according to Claim 1 or 2, wherein the compound which reacts with the bridged metallocene compound to form an ion pair is a compound represented by the following Formula 6:

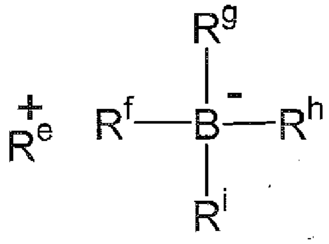

··· ( (Formula 6)

wherein, in Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.

4. The lubricating oil composition for industrial gears according to Claim 3, wherein the ammonium cation is a dimethylanilinium cation.

5. The lubricating oil composition for industrial gears according to Claim 3 or 4, wherein the catalyst system further comprises an organoaluminum compound selected from a group consisting of trimethyl aluminum and triisobutyl aluminum.

6. The lubricating oil composition for industrial gears according to any one of Claims 1 to 5, wherein the liquid random copolymer (B) has the properties of the below (B1) to (B5),

(B1) The liquid random copolymer comprises 40 to 60 mol% of ethylene units and 60 to 40 mol% of $\alpha$-olefin units having 3 to 20 carbon atoms,
(B2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC),
(B3) The liquid random copolymer has a kinematic viscosity at 100°C of 30 to 5,000 $mm^2/s$,
(B4) The liquid random copolymer has a pour point of 30 to - 45°C, and
(B5) The liquid random copolymer has a Bromine Number of 0.1 g / 100 g or less.

7. The lubricating oil composition for industrial gears according to any one of Claims 1 to 6, having a kinematic viscosity at 40°C of 250 to 5,000 $mm^2/s$.

8. The lubricating oil composition for industrial gears according to any one of Claims 1 to 7, wherein the lubricant base oil (A) further satisfies the below (A4) to (A6):

(A4) The lubricant base oil (A) has a kinematic viscosity at 100°C of 1 to 10 $mm^2/s$,
(A5) The lubricant base oil (A) has a viscosity index of 110 or more, and
(A6) The lubricant base oil (A) has a pour point of -10°C or lower.

**9.** The lubricating oil composition for industrial gears according to any one of Claims 1 to 8, wherein 30 to 100% by mass of the lubricant base oil (A) is a mineral oil.

**10.** The lubricating oil composition for industrial gears according to any one of Claims 1 to 9, wherein 30 to 100% by mass of the lubricant base oil (A) is a synthetic oil, and the synthetic oil is a poly $\alpha$-olefin (PAO) and/or an ester oil.

**11.** A use of the lubricating oil composition for industrial gears according to any one of Claims 1 to 10 as gear oil for wind power generation or as gear oil for machine tools and molding machines.

**12.** A method for producing a lubricating oil composition for industrial gears, comprising the steps of:

preparing a liquid random copolymer (B) of ethylene and $\alpha$-olefin by the following method ($\alpha$); and
preparing a lubricating oil composition for industrial gears by mixing a lubricant base oil (A) in an amount of 10 to 90% by mass of the lubricating oil composition, the lubricant base oil (A) having the properties of the below (A1) to (A3), and the liquid random copolymer (B) in an amount of 90 to 10% by mass of the lubricating oil composition, wherein the total amount of the lubricant base oil (A) and the copolymer (B) is 100% by mass, the lubricating oil composition for industrial gears having the property of the below (c1):

(A1) The lubricant base oil (A) has a kinematic viscosity at 100°C of 1 to 100 $mm^2/s$,
(A2) The lubricant base oil (A) has a viscosity index of 100 or more,
(A3) The lubricant base oil (A) has a pour point of 0°C or lower,
(c1) The lubricating oil composition for industrial gears has a kinematic viscosity at 40°C of 100 to 10,000 $mm^2/s$,
(Method ($\alpha$))

A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair,

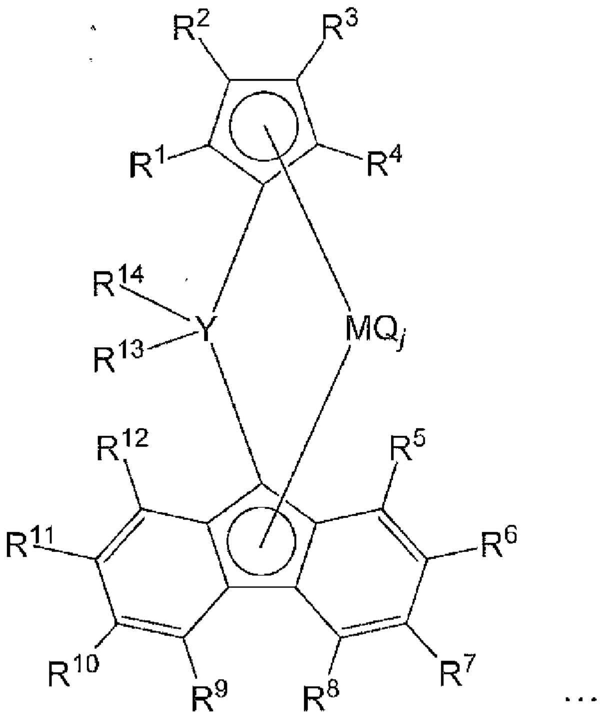

(Formula 1)

wherein, in Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,
wherein $R^2$ or $R^3$ bonded to the 3-position of the cyclopentadienyl group is a n-butyl group,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.

**Patentansprüche**

**1.** Schmierölzusammensetzung für Industriegetriebe, umfassend:

10 bis 90 Massen-% eines Schmiermittelbasisöls (A) mit den nachstehenden Eigenschaften (A1) bis (A3), und 90 bis 10 Massen-% eines flüssigen statistischen Copolymers (B) von Ethylen und $\alpha$-Olefin, wobei das flüssige statistische Copolymer (B) durch das nachstehende Verfahren ($\alpha$) hergestellt wird, wobei die Gesamtmenge des Schmiermittelbasisöls (A) und des Copolymers (B) 100 Massen-% beträgt,
wobei die Schmierölzusammensetzung für Industriegetriebe die nachstehende Eigenschaft (C1) aufweist:

(A1) das Schmiermittelbasisöl weist eine kinematische Viskosität bei 100°C von 1 bis 100 $mm^2/s$ auf,
(A2) das Schmiermittelbasisöl weist einen Viskositätsindex von 100 oder mehr auf,
(A3) das Schmiermittelbasisöl weist einen Stockpunkt von 0°C oder niedriger auf,
(C1) die Schmierölzusammensetzung für Industriegetriebe weist eine kinematische Viskosität bei 40°C von 100 bis 10.000 $mm^2/s$ auf,

(Verfahren ($\alpha$))
Verfahren ($\alpha$) zur Herstellung eines flüssigen statistischen Copolymers von Ethylen und $\alpha$-Olefin, umfassend einen Schritt des Durchführens einer Lösungspolymerisation von Ethylen und $\alpha$-Olefin mit 3 bis 20 Kohlenstoffatomen mit einem Katalysatorsystem, umfassend:

(a) eine verbrückte Metallocenverbindung, dargestellt durch die folgende Formel 1, und
(b) mindestens eine Verbindung, ausgewählt aus einer Gruppe, bestehend aus

(i) einer Organoaluminiumoxy-Verbindung, und
(ii) einer Verbindung, die mit der verbrückten Metallocenverbindung unter Bildung eines Ionenpaares reagiert,

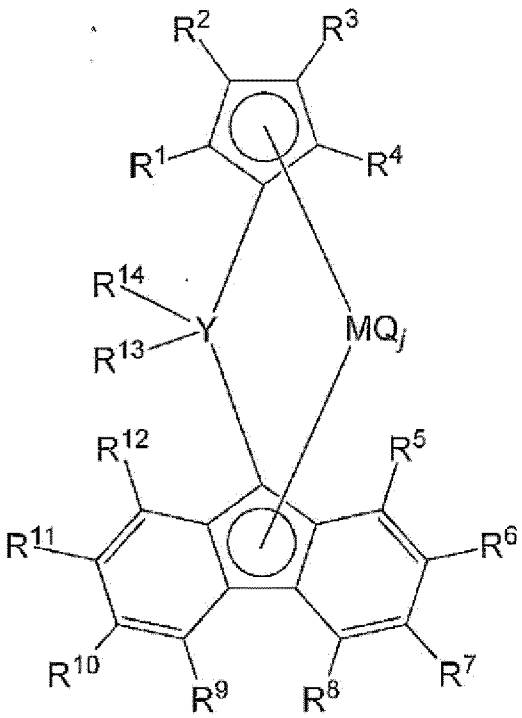

... (Formel 1)

wobei in Formel 1 $R^1$, $R^2$, $R^3$, $R^4$, $R^5$, $R^8$, $R^9$ und $R^{12}$ jeweils und unabhängig voneinander ein Wasserstoffatom, eine Kohlenwasserstoffgruppe oder eine siliciumhaltige Kohlenwasserstoffgruppe sind, und benachbarte Gruppen optional unter Bildung einer Ringstruktur miteinander verbunden sind,
wobei $R^2$ oder $R^3$, gebunden an die 3-Position der Cyclopentadienylgruppe, eine n-Butylgruppe ist,
$R^6$ und $R^{11}$, die gleich sind, ein Wasserstoffatom, eine Kohlenwasserstoffgruppe oder eine siliciumhaltige Kohlenwasserstoffgruppe sind,
$R^7$ und $R^{10}$, die gleich sind, ein Wasserstoffatom, eine Kohlenwasserstoffgruppe oder eine siliciumhaltige Kohlenwasserstoffgruppe sind,
$R^6$ und $R^7$ optional mit einem Kohlenwasserstoff mit 2 bis 3 Kohlenstoffatomen unter Bildung einer Ringstruktur verbunden sind,
$R^{11}$ und $R^{10}$ optional mit einem Kohlenwasserstoff mit 2 bis 3 Kohlenstoffatomen unter Bildung einer Ringstruktur verbunden sind,
$R^6$, $R^7$, $R^{10}$ und $R^{11}$ nicht gleichzeitig ein Wasserstoffatom sind;
Y ein Kohlenstoffatom oder ein Siliciumatom ist;
$R^{13}$ und $R^{14}$ unabhängig voneinander eine Arylgruppe sind;
M Ti, Zr oder Hf ist;
Q unabhängig Halogen, eine Kohlenwasserstoffgruppe, ein anionischer Ligand oder ein neutraler Ligand, der mit einem freien Elektronenpaar koordiniert sein kann, ist; und
j eine ganze Zahl von 1 bis 4 ist.

2. Schmierölzusammensetzung für Industriegetriebe gemäß Anspruch 1, wobei $R^6$ und $R^{11}$, die gleich sind, Kohlen-

wasserstoffgruppen mit 1 bis 20 Kohlenstoffatomen sind, wobei $R^6$ und $R^{11}$ bevorzugt alle tert-Butylgruppen sind.

3. Schmierölzusammensetzung für Industriegetriebe gemäß Anspruch 1 oder 2, wobei die Verbindung, die mit der verbrückten Metallocenverbindung unter Bildung eines Ionenpaares reagiert, eine Verbindung, dargestellt durch die folgende Formel 6, ist:

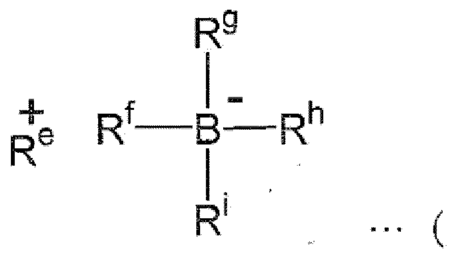

(Formel 6)

wobei in Formel 6 $R^{e+}$ $H^+$, ein Carbenium-Kation, ein Oxonium-Kation, ein Ammonium-Kation, ein Phosphonium-Kation, ein Cycloheptyltrienyl-Kation oder ein Ferrocenium-Kation mit einem Übergangsmetall ist, und $R^f$ bis $R^i$ jeweils unabhängig voneinander eine Kohlenwasserstoffgruppe mit 1 bis 20 Kohlenstoffatomen sind.

4. Schmierölzusammensetzung für Industriegetriebe gemäß Anspruch 3, wobei das Ammonium-Kation ein Dimethylanilinium-Kation ist.

5. Schmierölzusammensetzung für Industriegetriebe gemäß Anspruch 3 oder 4, wobei das Katalysatorsystem ferner eine Organoaluminiumverbindung umfasst, die aus einer Gruppe ausgewählt ist, die aus Trimethylaluminium und Triisobutylaluminium besteht.

6. Schmierölzusammensetzung für Industriegetriebe gemäß einem der Ansprüche 1 bis 5, wobei das flüssige statistische Copolymer (B) die nachstehenden Eigenschaften (B1) bis (B5) aufweist:

(B1) das flüssige statistische Copolymer umfasst 40 bis 60 Mol-% Ethyleneinheiten und 60 bis 40 Mol-% $\alpha$-Olefineinheiten mit 3 bis 20 Kohlenstoffatomen,
(B2) das flüssige statistische Copolymer weist ein zahlenmittleres Molekulargewicht (Mn) von 500 bis 10.000 und eine Molekulargewichtsverteilung (Mw/Mn, Mw ist das gewichtsmittlere Molekulargewicht) von 3 oder weniger, gemessen durch Gelpermeationschromatographie (GPC), auf,
(B3) das flüssige statistische Copolymer weist eine kinematische Viskosität bei 100°C von 30 bis 5.000 $mm^2/s$ auf,
(B4) das flüssige statistische Copolymer weist einen Stockpunkt von 30 bis -45°C auf, und
(B5) das flüssige statistische Copolymer weist eine Bromzahl von 0,1 g / 100 g oder weniger auf.

7. Schmierölzusammensetzung für Industriegetriebe gemäß einem der Ansprüche 1 bis 6, die eine kinematische Viskosität bei 40°C von 250 bis 5.000 $mm^2/s$ aufweist.

8. Schmierölzusammensetzung für Industriegetriebe gemäß einem der Ansprüche 1 bis 7, wobei das Schmiermittelbasisöl (A) ferner die nachstehenden (A4) bis (A6) erfüllt:

(A4) das Schmiermittelbasisöl (A) weist eine kinematische Viskosität bei 100°C von 1 bis 10 $mm^2/s$ auf,
(A5) das Schmiermittelbasisöl (A) weist einen Viskositätsindex von 110 oder mehr auf, und
(A6) das Schmiermittelbasisöl (A) weist einen Stockpunkt von -10°C oder niedriger auf.

9. Schmierölzusammensetzung für Industriegetriebe gemäß einem der Ansprüche 1 bis 8, wobei 30 bis 100 Massen-% des Schmiermittelbasisöls (A) ein Mineralöl sind.

10. Schmierölzusammensetzung für Industriegetriebe gemäß einem der Ansprüche 1 bis 9, wobei 30 bis 100 Massen-% des Schmiermittelbasisöls (A) ein synthetisches Öl sind und das synthetische Öl ein Poly-$\alpha$-olefin (PAO) und/oder ein Esteröl ist.

11. Verwendung der Schmierölzusammensetzung für Industriegetriebe gemäß einem der Ansprüche 1 bis 10 als Getriebeöl für die Windenergieerzeugung oder als Getriebeöl für Werkzeug- und Formmaschinen.

**12.** Verfahren zur Herstellung einer Schmierölzusammensetzung für Industriegetriebe, umfassend die Schritte:

das Herstellen eines flüssigen statistischen Copolymers (B) von Ethylen und $\alpha$-Olefin durch das folgende Verfahren ($\alpha$); und
das Herstellen einer Schmierölzusammensetzung für Industriegetriebe durch Mischen eines Schmiermittelbasisöls (A) in einer Menge von 10 bis 90 Massen-% der Schmierölzusammensetzung, wobei das Schmiermittelbasisöl (A) die nachstehenden Eigenschaften (A1) bis (A3) aufweist, und des flüssigen statistischen Copolymers (B) in einer Menge von 90 bis 10 Massen-% der Schmierölzusammensetzung, wobei die Gesamtmenge des Schmiermittelbasisöls (A) und des Copolymers (B) 100 Massen-% beträgt, wobei die Schmierölzusammensetzung für Industriegetriebe die nachstehende Eigenschaft (C1) aufweist:

(A1) das Schmiermittelbasisöl (A) weist eine kinematische Viskosität bei 100°C von 1 bis 100 $mm^2/s$ auf,
(A2) das Schmiermittelbasisöl (A) weist einen Viskositätsindex von 100 oder mehr auf,
(A3) das Schmiermittelbasisöl (A) weist einen Stockpunkt von 0°C oder niedriger auf,
(C1) die Schmierölzusammensetzung für Industriegetriebe weist eine kinematische Viskosität bei 40°C von 100 bis 10.000 $mm^2/s$ auf,

(Verfahren ($\alpha$))
Verfahren ($\alpha$) zur Herstellung eines flüssigen statistischen Copolymers von Ethylen und $\alpha$-Olefin, umfassend einen Schritt des Durchführens einer Lösungspolymerisation von Ethylen und $\alpha$-Olefin mit 3 bis 20 Kohlenstoffatomen mit einem Katalysatorsystem, umfassend:

(a) eine verbrückte Metallocenverbindung, dargestellt durch die folgende Formel 1, und
(b) mindestens eine Verbindung, ausgewählt aus einer Gruppe, bestehend aus

(i) einer Organoaluminiumoxy-Verbindung, und
(ii) einer Verbindung, die mit der verbrückten Metallocenverbindung unter Bildung eines Ionenpaares reagiert,

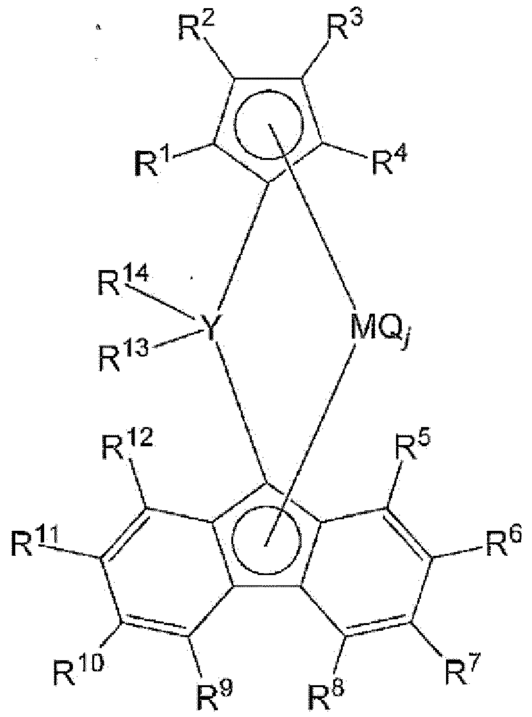

... (Formel 1)

wobei in Formel 1 $R^1$, $R^2$, $R^3$, $R^4$, $R^5$, $R^8$, $R^9$ und $R^{12}$ jeweils und unabhängig voneinander ein Wasserstoffatom, eine Kohlenwasserstoffgruppe oder eine siliciumhaltige Kohlenwasserstoffgruppe sind, und benachbarte Gruppen optional unter Bildung einer Ringstruktur miteinander verbunden sind,
wobei $R^2$ oder $R^3$, gebunden an die 3-Position der Cyclopentadienylgruppe, eine n-Butylgruppe ist,
$R^6$ und $R^{11}$, die gleich sind, ein Wasserstoffatom, eine Kohlenwasserstoffgruppe oder eine siliciumhaltige Kohlenwasserstoffgruppe sind,
$R^7$ und $R^{10}$, die gleich sind, ein Wasserstoffatom, eine Kohlenwasserstoffgruppe oder eine siliciumhaltige Kohlenwasserstoffgruppe sind,
$R^6$ und $R^7$ optional mit einem Kohlenwasserstoff mit 2 bis 3 Kohlenstoffatomen unter Bildung einer Ringstruktur verbunden sind,
$R^{11}$ und $R^{10}$ optional mit einem Kohlenwasserstoff mit 2 bis 3 Kohlenstoffatomen unter Bildung einer Ringstruktur verbunden sind,
$R^6$, $R^7$, $R^{10}$ und $R^{11}$ nicht gleichzeitig ein Wasserstoffatom sind;
Y ein Kohlenstoffatom oder ein Siliciumatom ist;
$R^{13}$ und $R^{14}$ unabhängig voneinander eine Arylgruppe sind;
M Ti, Zr oder Hf ist;
Q unabhängig Halogen, eine Kohlenwasserstoffgruppe, ein anionischer Ligand oder ein neutraler Ligand, der mit einem freien Elektronenpaar koordiniert sein kann, ist; und
j eine ganze Zahl von 1 bis 4 ist.

## Revendications

**1.** Composition d'huile lubrifiante pour roues d'engrenage industrielles, comprenant

de 10 à 90 % en masse d'une huile de base lubrifiante (A) présentant les propriétés des points (A1) à (A3) ci-dessous, et
de 90 à 10 % en masse d'un copolymère aléatoire liquide (B) d'éthylène et de $\alpha$-oléfine, le copolymère aléatoire liquide (B) étant préparé par le procédé ($\alpha$) ci-dessous, dans laquelle la quantité totale de l'huile de base lubrifiante (A) et du copolymère (B) est de 100 % en masse,
la composition d'huile lubrifiante pour roues d'engrenage industrielles présentant la propriété du point (C1) ci-dessous :

(A1) L'huile de base lubrifiante présente une viscosité cinématique à 100 °C de 1 à 100 $mm^2/s$,
(A2) L'huile de base lubrifiante présente un indice de viscosité de 100 ou plus,
(A3) L'huile de base lubrifiante présente un point d'écoulement de 0 °C ou moins,
(C1) La composition d'huile lubrifiante pour roues d'engrenage industrielles présente une viscosité cinématique à 40 °C de 100 à 10 000 $mm^2/s$,
(Procédé ($\alpha$))

Procédé ($\alpha$) pour préparer un copolymère aléatoire liquide d'éthylène et de $\alpha$-oléfine, comprenant une étape de réalisation d'une polymérisation de solution d'éthylène et de $\alpha$-oléfine présentant de 3 à 20 atomes de carbone, sous un système catalyseur comprenant

(a) un composé métallocène ponté représenté par la Formule 1 suivante, et
(b) au moins un composé sélectionné parmi un groupe consistant en

(i) un oxy-composé d'organoaluminium, et
(ii) un composé qui réagit avec le composé métallocène ponté pour former une paire d'ions,

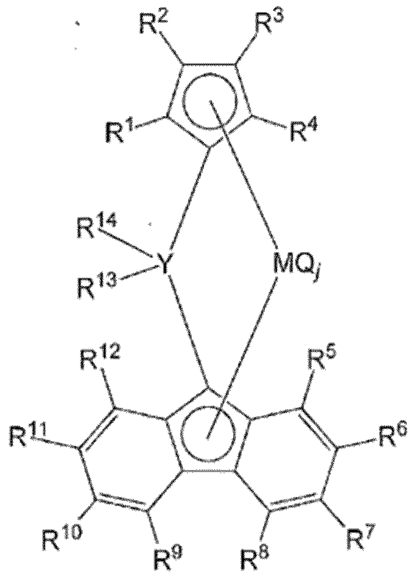

... (Formule 1)

dans laquelle, dans la Formule 1, $R^1$, $R^2$, $R^3$, $R^4$, $R^5$, $R^8$, $R^9$ et $R^{12}$ sont respectivement et indépendamment un atome d'hydrogène, un groupe hydrocarboné ou un groupe hydrocarboné contenant du silicium, et des groupes attenants sont facultativement reliés entre eux pour former une structure annulaire,
dans laquelle $R^2$ ou $R^3$ lié à la position 3 du groupe cyclopentadiényle est un groupe n-butyle,
$R^6$ et $R^{11}$, qui sont identiques, sont un atome d'hydrogène, un groupe hydrocarboné ou un groupe hydrocarboné contenant du silicium,
$R^7$ et $R^{10}$, qui sont identiques, sont un atome d'hydrogène, un groupe hydrocarboné ou un groupe hydrocarboné contenant du silicium,
$R^6$ et $R^7$ sont facultativement reliés à un hydrocarbure présentant 2 à 3 atomes de carbone pour former une structure annulaire,
$R^{11}$ et $R^{10}$ sont facultativement reliés à un hydrocarbure présentant 2 à 3 atomes de carbone pour former une structure annulaire,
$R^6$, $R^7$, $R^{10}$ et $R^{11}$ ne sont pas un atome d'hydrogène en même temps ;
Y est un atome de carbone ou un atome de silicium ;
$R^{13}$ et $R^{14}$ sont indépendamment un groupe aryle ;
M est Ti, Zr ou Hf ;
Q est indépendamment un halogène, un groupe hydrocarboné, un ligand anionique ou un ligand neutre qui peut être coordonné à une paire libre d'électrons ; et
j est un nombre entier de 1 à 4.

2. Composition d'huile lubrifiante pour roues d'engrenage industrielles selon la revendication 1, dans laquelle $R^6$ et $R^{11}$, qui sont identiques, sont des groupes hydrocarbonés présentant 1 à 20 atomes de carbone, de préférence dans laquelle $R^6$ et $R^{11}$ sont tous les groupes tert-butyle.

3. Composition d'huile lubrifiante pour roues d'engrenage industrielles selon la revendication 1 ou la revendication 2, dans laquelle le composé qui réagit avec le composé métallocène ponté pour former une paire d'ions est un composé représenté par la Formule 6 suivante :

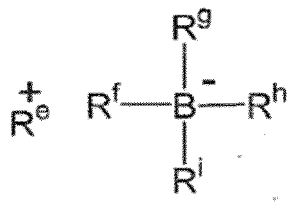

... ( (Formule 6)

dans laquelle, dans la Formule 6, $R^{e+}$ est $H^+$, un cation carbénium, un cation oxonium, un cation ammonium, un cation phosphonium, un cation cycloheptyltriényle ou un cation ferrocénium présentant un métal de transition, et $R^f$ à $R^i$ sont chacun indépendamment un groupe hydrocarboné présentant 1 à 20 atomes de carbone.

**4.** Composition d'huile lubrifiante pour roues d'engrenage industrielles selon la revendication 3, dans laquelle le cation ammonium est un cation diméthylanilinium.

**5.** Composition d'huile lubrifiante pour roues d'engrenage industrielles selon la revendication 3 ou la revendication 4, dans laquelle le système catalyseur comprend en outre un composé organoaluminium sélectionné parmi un groupe consistant en de l'aluminium de triméthyle et de l'aluminium de triisobutyle.

**6.** Composition d'huile lubrifiante pour roues d'engrenage industrielles selon l'une quelconque des revendications 1 à 5, dans laquelle le copolymère aléatoire liquide (B) présente les propriétés des points (B1) à (B5) ci-dessous,

(B1) le copolymère aléatoire liquide comprend 40 à 60 % en mole d'unités d'éthylène et 60 à 40 % en mole d'unités de $\alpha$-oléfine présentant 3 à 20 atomes de carbone,
(B2) le copolymère aléatoire liquide présente un poids moléculaire moyen en nombre (Mn) de 500 à 10 000 et une distribution de poids moléculaire (Mw/Mn, Mw est le poids moléculaire moyen en poids) de 3 ou moins, telle que mesurée par Chromatographie par Perméation sur Gel (GPC),
(B3) le copolymère aléatoire liquide présente une viscosité cinématique à 100 °C de 30 à 5000 $mm^2/s$,
(B4) le copolymère aléatoire liquide présente un point d'écoulement de 30 à -45 °C, et
(B5) le copolymère aléatoire liquide présente un indice de brome de 0,1 g / 100 g ou moins.

**7.** Composition d'huile lubrifiante pour roues d'engrenage industrielles selon l'une quelconque des revendications 1 à 6, présentant une viscosité cinématique à 40 °C de 250 à 5 000 $mm^2/s$.

**8.** Composition d'huile lubrifiante pour roues d'engrenage industrielles selon l'une quelconque des revendications 1 à 7, dans laquelle l'huile de base lubrifiante (A) satisfait en outre aux points (A4) à (A6) ci-dessous :

(A4) L'huile de base lubrifiante (A) présente une viscosité cinématique à 100 °C de 1 à 10 $mm^2/s$,
(A5) L'huile de base lubrifiante (A) présente un indice de viscosité de 110 ou plus, et
(A6) L'huile de base lubrifiante (A) présente un point d'écoulement de -10 °C ou moins.

**9.** Composition d'huile lubrifiante pour roues d'engrenage industrielles selon l'une quelconque des revendications 1 à 8, dans laquelle 30 à 100 % en masse de l'huile de base lubrifiante (A) est une huile minérale.

**10.** Composition d'huile lubrifiante pour roues d'engrenage industrielles selon l'une quelconque des revendications 1 à 9, dans laquelle 30 à 100 % en masse de l'huile de base lubrifiante (A) est une huile synthétique, et l'huile synthétique est une poly $\alpha$-oléfine (PAO) et/ou une huile d'ester.

**11.** Utilisation de la composition d'huile lubrifiante pour roues d'engrenage industrielles selon l'une quelconque des revendications 1 à 10 en tant qu'huile d'engrenage pour production d'énergie éolienne ou huile d'engrenage pour machinesoutils et machines de moulage.

**12.** Procédé de production d'une composition d'huile lubrifiante pour roues d'engrenage industrielles, comprenant les étapes de :

préparation d'un copolymère aléatoire liquide (B) d'éthylène et de $\alpha$-oléfine par le procédé ($\alpha$) suivant ; et
préparation d'une composition d'huile lubrifiante pour roues d'engrenage industrielles en mélangeant une huile de base lubrifiante (A) en une quantité de 10 à 90 % en masse de la composition d'huile lubrifiante, l'huile de base lubrifiante (A) présentant les propriétés des points (A1) à (A3) ci-dessous, et le copolymère aléatoire liquide (B) en une quantité de 90 à 10 % en masse de la composition d'huile lubrifiante, dans lequel la quantité totale de l'huile de base lubrifiante (A) et du copolymère (B) est de 100 % en masse, la composition d'huile lubrifiante pour roues d'engrenage industrielles présentant la propriété du point (C1) ci-dessous :

(A1) L'huile de base lubrifiante (A) présente une viscosité cinématique à 100 °C de 1 à 100 $mm^2/s$,
(A2) L'huile de base lubrifiante (A) présente un indice de viscosité de 100 ou plus,
(A3) L'huile de base lubrifiante (A) présente un point d'écoulement de 0 °C ou moins,

(C1) La composition d'huile lubrifiante pour roues d'engrenage industrielles présente une viscosité cinématique à 40 °C de 100 à 10 000 $mm^2/s$,
(Procédé ($\alpha$))

Procédé ($\alpha$) pour préparer un copolymère aléatoire liquide d'éthylène et de $\alpha$-oléfine, comprenant une étape de réalisation d'une polymérisation de solution d'éthylène et de $\alpha$-oléfine présentant de 3 à 20 atomes de carbone, sous un système catalyseur comprenant

(a) un composé métallocène ponté représenté par la Formule 1 suivante, et
(b) au moins un composé sélectionné parmi un groupe consistant en

(i) un oxy-composé d'organoaluminium, et
(ii) un composé qui réagit avec le composé métallocène ponté pour former une paire d'ions,

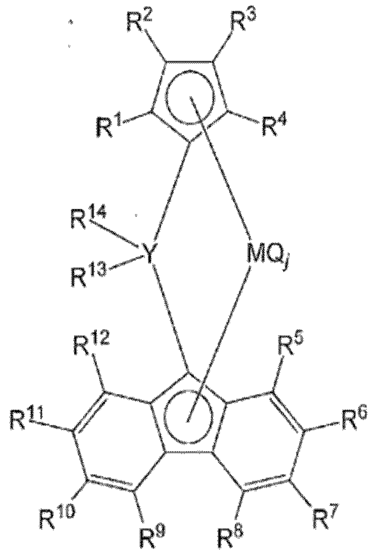

... (Formule 1)

dans laquelle, dans la Formule 1, $R^1$, $R^2$, $R^3$, $R^4$, $R^5$, $R^8$, $R^9$ et $R^{12}$ sont respectivement et indépendamment un atome d'hydrogène, un groupe hydrocarboné ou un groupe hydrocarboné contenant du silicium, et des groupes attenants sont facultativement reliés entre eux pour former une structure annulaire,
dans laquelle $R^2$ ou $R^3$ lié à la position 3 du groupe cyclopentadiényle est un groupe n-butyle,
$R^6$ et $R^{11}$, qui sont identiques, sont un atome d'hydrogène, un groupe hydrocarboné ou un groupe hydrocarboné contenant du silicium,
$R^7$ et $R^{10}$, qui sont identiques, sont un atome d'hydrogène, un groupe hydrocarboné ou un groupe hydrocarboné contenant du silicium,
$R^6$ et $R^7$ sont facultativement reliés à un hydrocarbure présentant 2 à 3 atomes de carbone pour former une structure annulaire,
$R^{11}$ et $R^{10}$ sont facultativement reliés à un hydrocarbure présentant 2 à 3 atomes de carbone pour former une structure annulaire,
$R^6$, $R^7$, $R^{10}$ et $R^{11}$ ne sont pas un atome d'hydrogène en même temps ;
Y est un atome de carbone ou un atome de silicium ;
$R^{13}$ et $R^{14}$ sont indépendamment un groupe aryle ;
M est Ti, Zr ou Hf ;
Q est indépendamment un halogène, un groupe hydrocarboné, un ligand anionique ou un ligand neutre qui peut être coordonné à une paire libre d'électrons ; et
j est un nombre entier de 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2000034420 A1
- JP H08301939 A
- JP 2011190377 A
- JP 2016069406 A
- EP 2921509 A1
- EP 0776959 A
- EP 0668342 A
- WO 9721788 A
- WO 0015736 A
- WO 0014188 A
- WO 0014187 A
- WO 0014183 A
- WO 0014179 A
- WO 0008115 A
- WO 9941332 A
- EP 1029029 A
- WO 0118156 A
- WO 0157166 A
- US 3382291 A
- US 3763244 A
- US 5171908 A
- US 3780128 A
- US 4032591 A
- JP H01163136 A
- US 4967032 A
- US 4926004 A
- JP 63037102 A
- JP 2005200447 A
- JP 2005200448 A
- JP 2009503147 A
- JP 2009501836 A
- US 3909432 A
- US 4960878 A
- US 5041584 A
- KR 10551147 A
- JP H01501950 A
- JP H03179005 A
- JP H03179006 A
- JP H03207703 A
- JP H03207704 A
- US 5321106 A
- JP 2004051676 A


### Non-patent literature cited in the description


- Illustrated guide to the introductory basics of industrial lubricating oil. Lubricants Department, Lubricant Technology, 2011
- Tosoh Research & Technology Review. Tosoh Finechem Corporation, 2003, vol. 47, 55